# EUROPEAN PATENT APPLICATION

(11) **EP 4 557 700 A1**
(43) Date of publication of application: **21.05.2025**
(21) Application number: 23851440.0
(22) Date of filing: 29.06.2023
(51) Int. Cl.: H04L 65/80

(54) **COMMUNICATION METHOD, APPARATUS, AND SYSTEM**

(30) Priority: 11.08.2022 CN 202210961956
(71) Applicant: Huawei Technologies Co., Ltd., Shenzhen, Guangdong 518129 (CN)
(72) Inventor: LIU, Liangliang, Shenzhen, Guangdong 518129 (CN); HUANG, Kai, Shenzhen, Guangdong 518129 (CN); ZHU, Dengyun, Shenzhen, Guangdong 518129 (CN)
(74) Representative: Goddar, Heinz J.
(86) International application number: PCT/CN2023/103765
(87) International publication number: WO 2024/032213

(57) **Abstract**

A communication method, apparatus, and system are provided. The method includes: A media plane network element receives, from an application server, request information used to request the media plane network element to allocate a media endpoint used to provide a resource-type service, where the request information includes information about a first media endpoint used to provide an access-type service; and the media plane network element sends, to the application server, information about a second media endpoint used to provide the resource-type service, where the second media endpoint is determined by the media plane network element depending on whether the first media endpoint belongs to the media plane network element. The information about the first media endpoint is carried in the request information, so that the media plane network element determines and sends the information about the second media endpoint depending on whether the first media endpoint belongs to the media plane network element. The application server does not need to determine whether the media plane network element that allocates an endpoint and the media plane network element on which the first media endpoint is disposed are a same media plane network element. This simplifies an operation of the application server.

## Description

This application claims priority to Chinese Patent Application No. 202210961956.2, filed with the China National Intellectual Property Administration on August 11, 2022 and entitled "COMMUNICATION METHOD, APPARATUS, AND SYSTEM", which is incorporated herein by reference in its entirety.

### TECHNICAL FIELD

Embodiments of this application relate to the field of internet protocol (internet protocol, IP) multimedia subsystem (IP multimedia subsystem, IMS) communication technologies, and in particular, to a communication method, apparatus, and system.

### BACKGROUND

To meet a requirement of multimedia communication, the 3rd generation partnership project (3rd generation partnership project, 3GPP) organization introduces an IMS based on an original packet bearer network. A media plane network element in the IMS may provide a control plane network element with a plurality of media plane services associated with a call service, for example, an access-type service and a resource-type service (for example, a voice conference), so that a network side provides rich media stream transmission services for a terminal device in the call service. The media plane network element configured to provide the access-type service may be referred to as an access-type media plane network element, and the media plane network element configured to provide the resource-type service may be referred to as a resource-type media plane network element. In actual application, one media plane network element may be both the access-type media plane network element and the resource-type media plane network element.

Therefore, in a procedure of providing the media plane service associated with the call service, an application server (application server, AS) serving as the control plane network element needs to identify a relationship between the resource-type media plane network element currently allocated to the AS and the access-type media plane network element previously allocated to the AS, and perform different processing. For example, the AS needs to determine, depending on whether the resource-type media plane network element and the access-type media plane network element are a same network element, whether to request the resource-type media plane network element to allocate a new media endpoint. In such a mechanism, the AS needs to support different processing procedures. This increases processing complexity of the AS and reduces processing efficiency of the AS.

How to reduce the processing complexity of the AS and improve the processing efficiency of the AS in a process of providing a media plane network element function for the AS becomes a problem to be urgently resolved.

### SUMMARY

Embodiments of this application provide a communication method, to simplify an operation of an AS in a procedure of providing a media stream transmission service.

According to a first aspect, a communication method is provided. The method may be performed by a communication apparatus. The communication apparatus may be a communication device or a communication apparatus that can support the communication device in implementing a function required by the method, for example, a chip system. For example, the communication apparatus is a media plane network element, a chip disposed in the media plane network element, or another component configured to implement a function of the media plane network element. The following uses an example in which the communication device is the media plane network element for description.

The method includes: A media plane network element receives request information from an application server, where the request information is used to request the media plane network element to allocate a media endpoint used to provide a resource-type service, and the request information includes information about a first media endpoint used to provide an access-type service; and the media plane network element sends, to the application server, information about a second media endpoint service, where the second media endpoint is determined by the media plane network element depending on whether the first media endpoint belongs to the media plane network element.

For a resource-type media plane network element allocated to the application server AS, in the foregoing technical solution, the AS can unconditionally request the resource-type media plane network element to allocate a media endpoint. That is, the AS does not need to determine whether the resource-type media plane network element and the access-type media plane network element that is previously allocated to the AS are a same media plane network element before determining whether to request the resource-type media plane network element to allocate a new media endpoint. This reduces processing complexity of the AS, and improves processing efficiency of the AS. This is because when requesting the resource-type media plane network element to allocate the media endpoint (a resource-type media endpoint for short) used to provide the resource-type service, the AS may provide the information about the first media endpoint (an access-type media endpoint for short) used to provide the access-type service, so that the resource-type media plane network element can determine, depending on whether the first media endpoint is the media endpoint on the resource-type media plane network element, which second media endpoint is to be allocated. In other words, a task of determining whether the resource-type media plane network element and the access-type media plane network element are a same network element is transferred to the media plane network element. This improves the processing efficiency of the AS. In a possible case, the AS is a device provided by a third party, and the media plane network element is provided by an operator. The processing complexity of the AS is reduced and the processing efficiency of the AS is improved by increasing processing complexity of the media plane network element, so that use satisfaction of the third party (for example, a client of the operator) can be improved. Therefore, this is acceptable.

With reference to the first aspect, in some implementations of the first aspect, the first media endpoint belongs to the media plane network element, and a local address of the second media endpoint is the same as a local address of the first media endpoint.

Specifically, that the first media endpoint belongs to the media plane network element may be further understood as that the first media endpoint is a media endpoint on the media plane network element. In this case, the media plane network element determines, based on a case in which the first media endpoint belongs to the media plane network element, not to allocate a new media endpoint, and uses a mirror media endpoint of the first media endpoint as the second media endpoint. For the media plane network element, the mirror media endpoint of the first media endpoint is the allocated first media endpoint, that is, the media plane network element uses the first media endpoint on the media plane network element as the second media endpoint.

With reference to the first aspect, in some implementations of the first aspect, the first media endpoint does not belong to the media plane network element, and a local address of the second media endpoint is different from a local address of the first media endpoint. That the local address of the second media endpoint is different from the local address of the first media endpoint may be understood as that the second media endpoint and the first media endpoint are media endpoints on different media plane network elements.

Specifically, that the first media endpoint does not belong to the media plane network element may be further understood as that the first media endpoint is not the media endpoint on the media plane network element. In this case, the media plane network element determines, based on a case in which the first media endpoint does not belong to the media plane network element, to allocate a new media endpoint as the second media endpoint.

The local address of the first media endpoint indicates an IP address and a port of the first media endpoint in a connection between the first media endpoint and another endpoint. The local address of the second media endpoint indicates an IP address and a port of the second media endpoint in a connection between the second media endpoint and another endpoint.

Based on the foregoing technical solution, when the media plane network element determines that the first media endpoint is the media endpoint on the media plane network element, the local address of the second media endpoint allocated by the media plane network element is the same as the local address of the first media endpoint. When the media plane network element determines that the first media endpoint is not the media endpoint on the media plane network element, the local address of the second media endpoint determined by the media plane network element is different from the local address of the first media endpoint.

With reference to the first aspect, in some implementations of the first aspect, the information about the first media endpoint includes an identifier of a media plane network element to which the first media endpoint belongs and an identifier of the first media endpoint; or the information about the first media endpoint includes an identifier of the first media endpoint, and the identifier of the first media endpoint includes an identifier of a media plane network element to which the first media endpoint belongs.

With reference to the first aspect, in some implementations of the first aspect, that the media plane network element determines, based on the information about the first media endpoint, whether the first media endpoint is the media endpoint on the media plane network element includes: The first media plane network element determines, based on the identifier of the media plane network element to which the first media endpoint belongs and the identifier of the first media endpoint, whether the media plane network element to which the first media endpoint belongs is the media plane network element.

Based on the foregoing technical solution, the information about the first media endpoint may include two parts of information: the identifier of the media plane network element to which the first media endpoint belongs and the identifier of the first media endpoint, so that the media plane network element that receives the information about the first media endpoint accurately determines, based on the information about the first media endpoint, whether the first media endpoint is the media endpoint on the media plane network element.

With reference to the first aspect, in some implementations of the first aspect, the method further includes: The media plane network element receives indication information from the application server, where the indication information indicates to perform the resource-type service, and the indication information includes the information about the second media endpoint; and the media plane network element performs the resource-type service based on the indication information.

With reference to the first aspect, in some implementations of the first aspect, the request information further includes a remote address, and the remote address indicates an address of a media endpoint that establishes a connection to the second media endpoint.

With reference to the first aspect, in some implementations of the first aspect, when the local address of the second media endpoint is different from the remote address, the media plane network element provides the resource-type service through the second media endpoint; or when the local address of the second media endpoint is the same as the remote address, the media plane network element provides the resource-type service through a third media endpoint, where the third media endpoint is determined by the media plane network element based on the information about the second media endpoint. The third media endpoint is an endpoint that is on the media plane network element and that is related to the second media endpoint, and an association relationship between different media endpoints on a media plane network element is known to the media plane network element.

Based on the foregoing technical solution, the media plane network element may determine, based on the received indication information, to perform the resource-type service, may determine, depending on whether the local address of the second media endpoint is the same as the remote address included in the request information, the media endpoint that is on the media plane network element and that performs the resource-type service, and provide the resource-type service through different media endpoints, to improve flexibility of the solution.

With reference to the first aspect, in some implementations of the first aspect, the media plane network element is a unified media plane function UMF network element.

According to a second aspect, a communication method is provided. The method may be performed by a communication apparatus. The communication apparatus may be a communication device or a communication apparatus that can support a communication device in implementing a function required by the method, for example, a chip system. For example, the communication apparatus is an application server, a chip disposed in the application server, or another component configured to implement a function of the application server. The following uses an example in which the communication device is the application server for description.

The method includes: An application server receives information about a media plane network element from a service discovery function network element; the application server sends request information to the media plane network element, where the request information is used to request the media plane network element to allocate a media endpoint used to provide a resource-type service, and the request information includes information about a first media endpoint used to provide an access-type service; and the application server receives information about a second media endpoint from the media plane network element, where the second media endpoint is determined by the media plane network element depending on whether the first media endpoint belongs to the media plane network element.

With reference to the second aspect, in some implementations of the second aspect, the request information further includes a remote address, and the remote address indicates an address of a media endpoint that establishes a connection to the second media endpoint.

A remote address of the second media endpoint indicates an IP address and a port of another endpoint in a connection between the second media endpoint and the another endpoint.

With reference to the second aspect, in some implementations of the second aspect, the first media endpoint belongs to the media plane network element, and a local address of the second media endpoint is the same as a local address of the first media endpoint.

With reference to the second aspect, in some implementations of the second aspect, the first media endpoint does not belong to the media plane network element, and a local address of the second media endpoint is different from a local address of the first media endpoint.

With reference to the second aspect, in some implementations of the second aspect, the information about the first media endpoint includes an identifier of a media plane network element to which the first media endpoint belongs and an identifier of the first media endpoint.

With reference to the second aspect, in some implementations of the second aspect, the method further includes: The application server sends indication information to the media plane network element, where the indication information indicates to perform the resource-type service.

For technical effects brought by the second aspect and the possible implementations of the second aspect, refer to the descriptions of the technical effects of the first aspect and the possible implementations of the first aspect.

According to a third aspect, a communication apparatus is provided. The apparatus is configured to perform the method provided in the first aspect. The apparatus includes a transceiver module and a processing module.

The transceiver module is configured to receive request information from an application server, where the request information is used to request the media plane network element to allocate a media endpoint used to provide a resource-type service, and the request information includes information about a first media endpoint used to provide an access-type service; and
the transceiver module is further configured to send, to the application server, information about a second media endpoint service, where the second media endpoint is determined by the media plane network element depending on whether the first media endpoint belongs to the media plane network element.

With reference to the third aspect, in some implementations of the third aspect, the first media endpoint belongs to the media plane network element, and a local address of the second media endpoint is the same as a local address of the first media endpoint.

With reference to the third aspect, in some implementations of the third aspect, the processing module is further configured to determine, based on a case in which the first media endpoint belongs to the media plane network element, not to allocate a new media endpoint, and use a mirror media endpoint of the first media endpoint as the second media endpoint.

With reference to the third aspect, in some implementations of the third aspect, the first media endpoint does not belong to the media plane network element, and a local address of the second media endpoint is different from a local address of the first media endpoint.

With reference to the third aspect, in some implementations of the third aspect, the processing module is further configured to determine, based on a case in which the first media endpoint does not belong to the media plane network element, to allocate a new media endpoint as the second media endpoint.

With reference to the third aspect, in some implementations of the third aspect, the information about the first media endpoint includes an identifier of a media plane network element to which the first media endpoint belongs and an identifier of the first media endpoint.

With reference to the third aspect, in some implementations of the third aspect, that the processing module determines, based on the information about the first media endpoint, whether the first media endpoint is the media endpoint on the media plane network element includes: The processing module determines, based on the identifier of the media plane network element to which the first media endpoint belongs and the identifier of the first media endpoint, whether the media plane network element to which the first media endpoint belongs is the communication apparatus.

With reference to the third aspect, in some implementations of the third aspect, the transceiver module is further configured to receive indication information from the application server, where the indication information indicates to perform the resource-type service, and the indication information includes the information about the second media endpoint; and the processing module is further configured to perform the resource-type service based on the indication information.

With reference to the third aspect, in some implementations of the third aspect, the request information further includes a remote address, and the remote address indicates an address of a media endpoint that establishes a connection to the second media endpoint.

With reference to the third aspect, in some implementations of the third aspect, when the local address of the second media endpoint is different from the remote address, the media plane network element provides the resource-type service through the second media endpoint; or when the local address of the second media endpoint is the same as the remote address, the media plane network element provides the resource-type service through a third media endpoint, where the third media endpoint is determined by the media plane network element based on the information about the second media endpoint.

According to a fourth aspect, a communication apparatus is provided. The apparatus is configured to perform the method provided in the first aspect. The apparatus includes a transceiver module and a processing module.

The transceiver module is configured to receive information about a media plane network element from a service discovery function network element; the transceiver module is further configured to send request information to the media plane network element, where the request information is used to request the media plane network element to allocate a media endpoint used to provide a resource-type service, and the request information includes information about a first media endpoint used to provide an access-type service; and the transceiver module is further configured to receive information about a second media endpoint from the media plane network element, where the second media endpoint is determined by the media plane network element depending on whether the first media endpoint belongs to the media plane network element.

With reference to the fourth aspect, in some implementations of the fourth aspect, the request information further includes a remote address, and the remote address indicates an address of a media endpoint that establishes a connection to the second media endpoint.

With reference to the fourth aspect, in some implementations of the fourth aspect, the first media endpoint belongs to the media plane network element, and a local address of the second media endpoint is the same as a local address of the first media endpoint.

With reference to the fourth aspect, in some implementations of the fourth aspect, the first media endpoint does not belong to the media plane network element, and a local address of the second media endpoint is different from a local address of the first media endpoint.

With reference to the fourth aspect, in some implementations of the fourth aspect, the information about the first media endpoint includes an identifier of a media plane network element to which the first media endpoint belongs and an identifier of the first media endpoint.

With reference to the fourth aspect, in some implementations of the fourth aspect, the transceiver module is further configured to send indication information to the media plane network element, where the indication information indicates to perform the resource-type service.

According to a fifth aspect, an embodiment of this application provides a communication apparatus. The communication apparatus has a function of implementing behavior in the method embodiment in the first aspect or the second aspect. For beneficial effects, refer to the descriptions in the first aspect and the second aspect. Details are not described herein again. The communication apparatus may be the media plane network element in the first aspect, or the communication apparatus may be an apparatus that can implement the method provided in the first aspect, for example, a chip or a chip system. Alternatively, the communication apparatus may be the application server in the second aspect, or the communication apparatus may be an apparatus that can implement the method provided in the second aspect, for example, a chip or a chip system.

In a possible design, the communication apparatus includes a corresponding means (means) or module configured to perform the method in the first aspect or the second aspect. For example, the communication apparatus includes a processing unit (sometimes also referred to as a processing module or a processor) and/or a transceiver unit (sometimes also referred to as a transceiver module or a transceiver). These units (modules) may perform corresponding functions in the method example in the first aspect or the second aspect. For details, refer to detailed descriptions in the method example. Details are not described herein again.

According to a sixth aspect, an embodiment of this application provides a communication apparatus. The communication apparatus may be the communication apparatus in the first aspect or the second aspect in the foregoing embodiments, or a chip or a chip system disposed in the communication apparatus in the first aspect or the second aspect. The communication apparatus includes a communication interface and a processor, and optionally, further includes a memory. The memory is configured to store a computer program. The processor is coupled to the memory and the communication interface. When the processor reads the computer program or instructions, the communication apparatus is enabled to perform the method performed by the media plane network element or the application server in the foregoing method embodiments.

According to a seventh aspect, an embodiment of this application provides a communication apparatus. The communication apparatus includes an input/output interface and a logic circuit. The input/output interface is configured to input and/or output information. The logic circuit is configured to perform the method according to the first aspect or the second aspect.

According to an eighth aspect, an embodiment of this application provides a chip system. The chip system includes a processor, may further include a memory and/or a communication interface, and is configured to implement the method in the first aspect or the second aspect. In a possible implementation, the chip system further includes a memory, configured to store a computer program. The chip system may include a chip, or may include a chip and another discrete component.

According to a ninth aspect, an embodiment of this application provides a communication system. The communication system includes a media plane network element and an application server. The media plane network element is configured to perform the method performed by a first control plane network element in the first aspect, and the application server is configured to perform the method performed by a network repository function network element in the second aspect.

According to a tenth aspect, this application provides a computer-readable storage medium. The computer-readable storage medium stores a computer program. When the computer program is run, the method in the first aspect or the second aspect is implemented.

According to an eleventh aspect, a computer program product is provided. The computer program product includes computer program code. When the computer program code is run, the method in the first aspect or the second aspect is performed.

For beneficial effects of the third aspect to the eleventh aspect and implementations thereof, refer to descriptions of beneficial effects of the first aspect to the second aspect and implementations thereof.

### BRIEF DESCRIPTION OF DRAWINGS

FIG. 1 is a diagram of a network architecture of a communication system according to an embodiment of this application;
FIG. 2(a)-1 and FIG. 2(a)-2 are a schematic flowchart of a procedure of receiving a call request and returning a 180 message;
FIG. 2(b) shows a procedure of playing a special ring back tone;
FIG. 2(c) shows another procedure of playing a special ring back tone;
FIG. 3 is a diagram of establishing a connection of a media transmission channel according to an embodiment of this application;
   (a) in FIG. 4 is another diagram of establishing a connection of a media transmission channel according to an embodiment of this application;

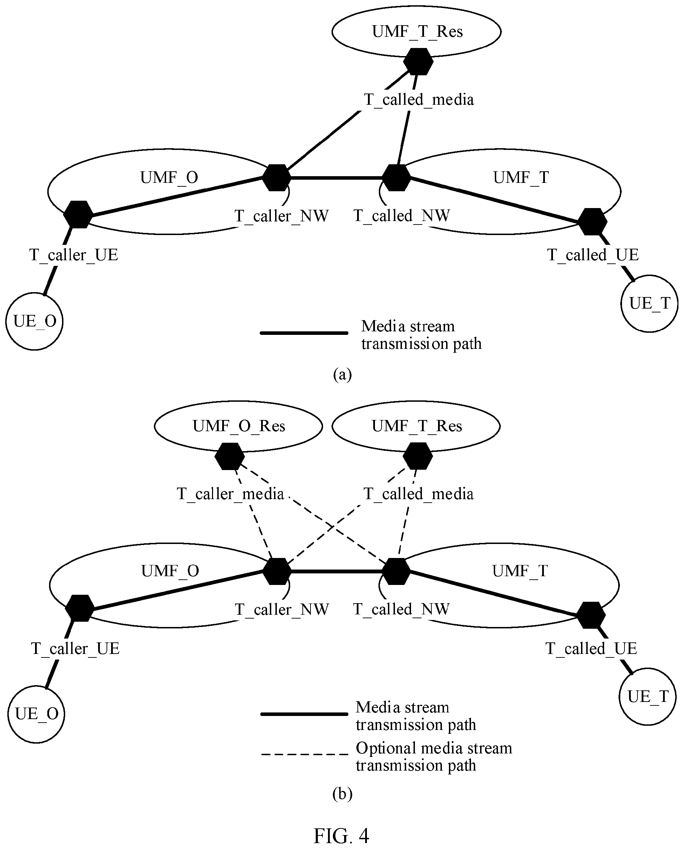

   (b) in FIG. 4 is still another diagram of establishing a connection of a media transmission channel according to an embodiment of this application;

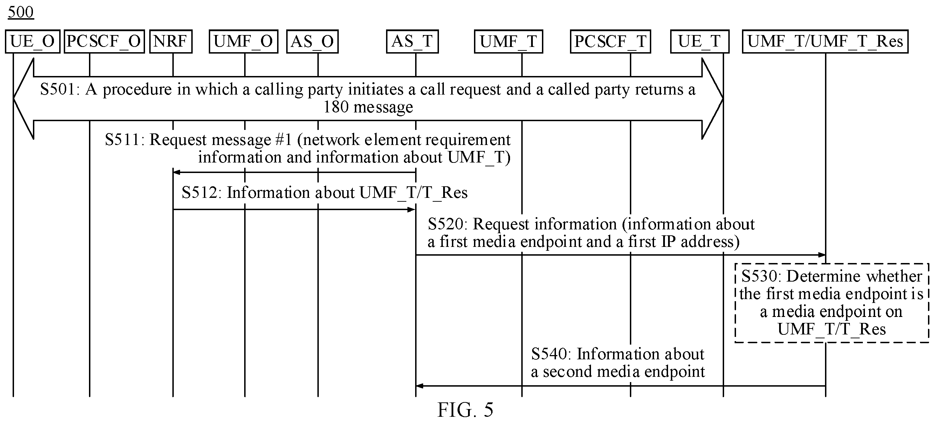

FIG. 5 is a schematic flowchart of a communication method according to an embodiment of this application;

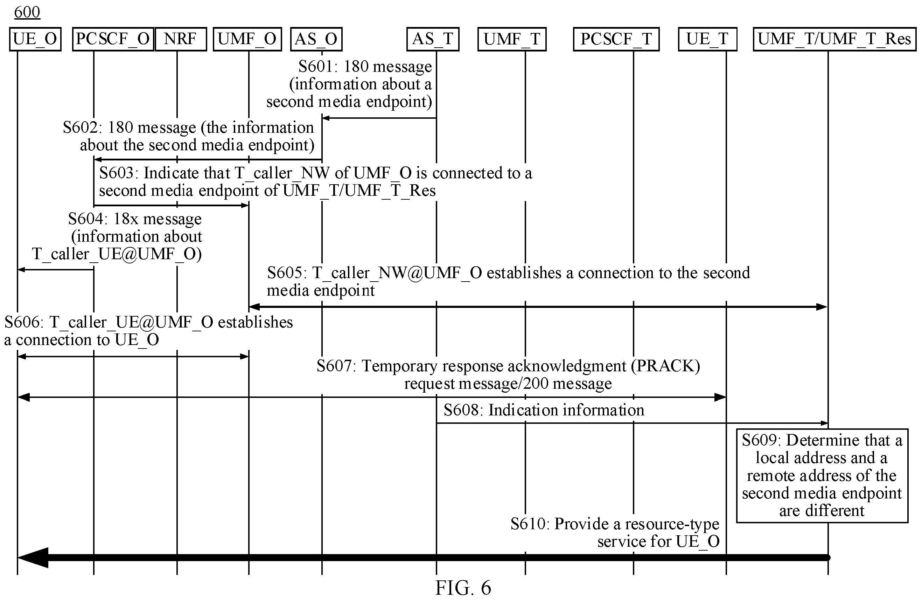

FIG. 6 is a schematic flowchart of providing a resource-type service according to an embodiment of this application;

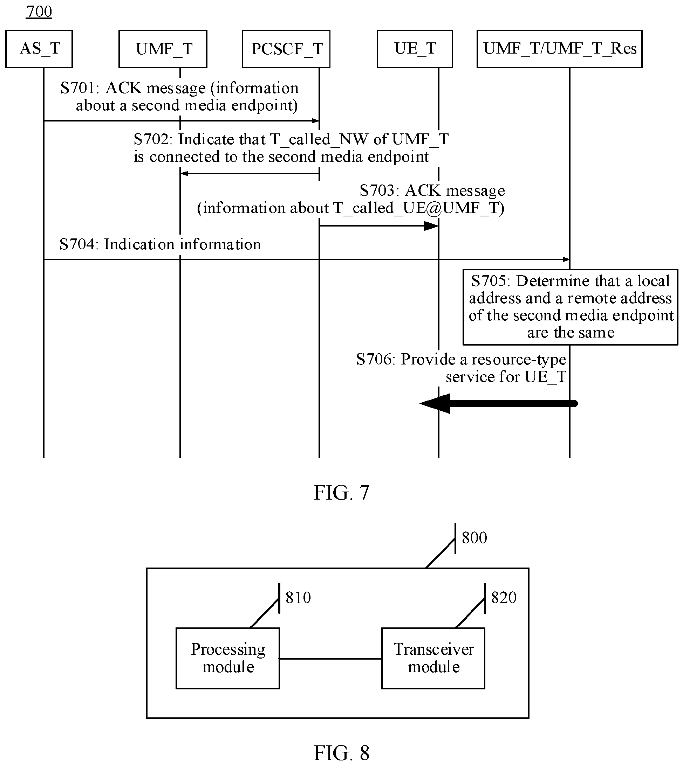

FIG. 7 is another schematic flowchart of providing a resource-type service according to an embodiment of this application;
FIG. 8 is a diagram of a structure of a communication apparatus according to an embodiment of this application; and

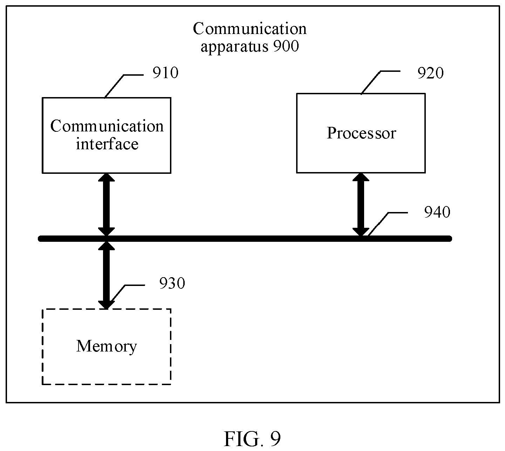

FIG. 9 is a diagram of another structure of a communication apparatus according to an embodiment of this application.

### DESCRIPTION OF EMBODIMENTS

The following describes technical solutions of embodiments of this application with reference to accompanying drawings.

The technical solution provided in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solution provided in this application may be further applied to a future communication system, for example, a 6th generation mobile communication system. The technical solution provided in embodiments of this application may be further applied to device-to-device (device-to-device, D2D) communication, vehicle-to-everything (vehicle-to-everything, V2X) communication, machine-to-machine (machine to machine, M2M) communication, machine-type communication (machine-type communication, MTC), an internet of things (internet of things, IoT) communication system, or another communication system.

To meet a requirement of multimedia communication, the 3GPP organization introduces an IMS based on an original packet bearer network. The IMS can provide not only a conventional voice service but also rich multimedia experience for a user. A significant feature of the IMS is that the IMS uses a session initiation protocol (Session Initiation Protocol, SIP) system, and communication is independent of access. The IMS can have a plurality of capabilities such as separating a plurality of media service control functions from bearer capabilities, separating a call from a session, separating an application from a service, separating a service from a network, and integrating a mobile network service with an internet service. The introduction of the IMS complies with a trend of integrated development of a communication network.

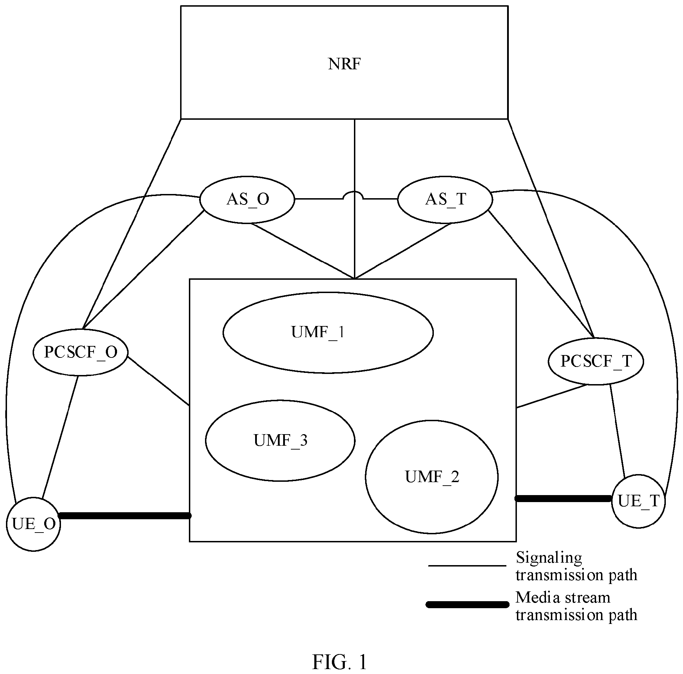

Embodiments of this application mainly provide an IMS-based communication method. To help a person skilled in the art understand the technical solution provided in embodiments of this application, a network element entity related to this application and a connection between network elements that are in an IMS system structure are first briefly described with reference to FIG. 1. An IMS architecture may include a network repository function network element, at least one control plane network element, at least one media plane network element, and at least one terminal device. FIG. 1 is described by using an example in which a network repository function network element is a network repository function (network repository function, NRF) network element, a control plane network element is a proxy call session control function (Proxy Call Session Control Function, P-CSCF) network element, and a media plane network element is a UMF network element. Another network element that can implement a function of the network repository function network element, a network element that can implement a function of the control plane network element, and a network element that can implement a function of the media plane network element also fall within the protection scope of this application.

It may be understood that, one UMF network element in embodiments of this application may be a converged UMF network element, or may be a non-converged UMF network element.

FIG. 1 is a diagram of an IMS architecture. The IMS architecture may include but is not limited to the following network elements (or referred to as functional network elements, functional entities, nodes, devices, or the like):
user terminals (user terminals, UE) (UE_O and UE_T shown in FIG. 1), P-CSCF network elements (P-CSCF_O and P-CSCF_T shown in FIG. 1), UMF network elements (UMF_1, UMF_2, and UMF_3 shown in FIG. 1), ASs (AS_O and AS_T shown in FIG. 1), and an NRF network element.

Further, the UMF network element is referred to as a UMF for short, the P-CSCF network element is referred to as a P-CSCF for short, and the NRF network element is referred to as an NRF for short. In other words, in the following descriptions of this application, the UMF may be replaced with the UMF network element, the P-CSCF may be replaced with the P-CSCF network element, and the NRF may be replaced with the NRF network element.

The following briefly describes the network elements shown in FIG. 1.
1. UE: The UE may include various handheld devices, vehicle-mounted devices, wearable devices, and computing devices that have a wireless communication function, or other processing devices connected to a wireless modem, and various forms of terminals, mobile stations (mobile stations, MS), terminals (terminals), soft terminals, or the like, for example, a water meter, an electricity meter, or a sensor.

For example, the user equipment in embodiments of this application may be referred to as an access terminal, a subscriber unit, a subscriber station, a mobile station, a remote station, a remote terminal, a mobile device, a user terminal (user terminal), a terminal equipment (terminal equipment), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a user equipment in a 5G network, a user equipment in a future evolved public land mobile network (public land mobile network, PLMN), a user equipment in future internet of vehicles, or the like. This is not limited in embodiments of this application.

By way of example but not limitation, in embodiments of this application, the wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a user equipment in an internet of things (internet of Things, IoT) system. IoT is an important part of future development of information technologies. A main technical feature of the IoT is connecting a thing to a network by using a communication technology, to implement an intelligent network for interconnection between a person and a machine or between one thing and another. In embodiments of this application, the IoT technology may implement massive connections, deep coverage, and terminal power saving by using, for example, a narrowband (narrowband, NB) technology.

In addition, in embodiments of this application, the user equipment may further include the sensor. Main functions of the sensor include collecting data (some user equipments), receiving control information and downlink data of an access network device, sending an electromagnetic wave, and transmitting uplink data to the access network device.

In embodiments of this application, the apparatus configured to implement a function of the user equipment may be the user equipment, or may be an apparatus that can support the user equipment in implementing the function, for example, a chip system or a combined component or component that can implement a function of the user equipment. The apparatus may be installed in the user equipment.

In embodiments of this application, the chip system may include a chip, or may include a chip and another discrete component. In the technical solution provided in embodiments of this application, an example in which the apparatus configured to implement the function of the user equipment is used to describe the technical solution provided in embodiments of this application.

2. P-CSCF: A call control function network element is a functional entity in an IMS network, and is a core of the IMS network. The call control function network element is mainly responsible for processing signaling control during a multimedia call session. In a 5G communication system, the call control function network element may be a serving-call session control function (serving-call session control function, CSCF) network element. In a future communication system (for example, a 6G communication system), an application service network element may still be the CSCF network element, or may have another name. This is not limited in embodiments of this application.

Based on functions, the CSCF network element may be further classified into a serving-call control function (serving-call session control function, SCSCF) network element, an interrogating-call session control function (interrogating-call session control function, ICSCF) network element, a proxy-call session control function (proxy-call session control function, PCSCF) network element, and the like.

Further, the CSCF network element is referred to as a CSCF for short, the SCSCF network element is referred to as an SCSCF for short, the ICSCF network element is referred to as an ICSCF for short, and the ICSCF network element is referred to as an ICSCF for short.

The SCSCF is a service processing node of the IMS network, and is responsible for IMS network registration of a terminal device and related media service processing. The PCSCF is located in a visited network, and is an edge network node of the IMS network, or may be an entry node for a user to access the IMS network. A function of the PCSCF in the IMS network is similar to performing a proxy service. Information from the terminal device or information sent to the terminal device needs to be forwarded by using the P-CSCF. For example, the PCSCF may be responsible for forwarding SIP signaling between a SIP user and a home network. The ICSCF is located on the home network and is a unified entry point of the home network. The ICSCF may be connected to the SCSCF and the PCSCF, and is configured to provide an entry to the home network for the terminal device. When the terminal device roams to another network, and sends a message to the PCSCF, the PCSCF may forward the message from the terminal device to the ICSCF, and send the message from the terminal device to the SCSCF by using the ICSCF. The ICSCF may be responsible for allocating an SCSCF serving the user or interrogating an SCSCF serving the user. In addition, the ICSCF/SCSCF is connected to the PCSCF on a local network through an Mw interface.

Compared with a media plane network element providing a media service, the PCSCF, the SCSCF, and the ICSCF are control plane network elements. In terms of functions, it may be considered that, the PCSCF is an access-type control plane network element, and the ICSCF is an interworking-type control plane access network element. It may be understood that, the PCSCF, the SCSCF, and the ICSCF may be independently configured in different entities, or may be integrated into a same entity. In the following, for ease of understanding and description, the PCSCF, the SCSCF, and the ICSCF are collectively referred to as the CSCF.

The media plane network element may be connected to the call control function network element by using a media gateway control network element. The media gateway control network element may be understood as a gateway that enables communication between an IMS user and a client user. Call control signaling from the client user is directed to the media gateway control network element. The media gateway control network element is mainly responsible for performing protocol conversion between an integrated services digital network (integrated services digital network, ISDN) user part or bearer independent call control and a session initiation protocol (session initiation protocol, SIP), and forwarding a session to the IMS. In the 5G communication system, the media gateway control network element may be a media gateway control function (media gateway control function, MGCF) network element. In the future communication system (for example, the 6G communication system), the application service network element may still be the MGCF, or may have another name. This is not limited in embodiments of this application. The MGCF is connected to the P-CSCF/I-CSCF network element/S-CSCF network element on the local network.

The media plane network element may alternatively be connected to the call control function network element by using an interconnection border control network element. The interconnection border control network element is a border functional entity of a control plane between two operator networks. In the 5G communication system, the interconnection border control network element may be an interconnection border control function (interconnection border control function, IBCF) network element. In embodiments of this application, in the future communication system (for example, the 6G communication system), the application service network element may still be the IBCF network element, or may have another name. This is not limited in embodiments of this application. The IBCF network element/TrGW is deployed between different IMS core networks or between the IMS core network and another IP network. An IP trunk is used for connection between networks. The IBCF is connected to the PCSCF/ICSCF/SCSCF on the local network. A signaling plane of the IBCF is connected to another network through an Ici interface. A media plane (TrGW) of the IBCF network element is connected to the another network through an Izi interface. Each operator can select an interworking node based on nature of a calling party. For example, when the calling party is the IMS user, the IBCF network element/TrGW is used for interworking.

The PCSCF is a multimedia system entry network element, is an access point for the terminal device to access the IMS, and is configured to complete user registration, quality of service control, security management, and the like. For example, in 5G, the multimedia system entry network element may be a proxy CSCF (Proxy-CSCF, P-CSCF) or have another name. Functioning as a SIP proxy, the P-CSCF transfers a SIP transaction proxy from a visited access network to the SCSCF on a home network of the P-CSCF (based on information recorded during registration).

Specifically, the P-CSCF is responsible for performing IP bearer (or another granularity, such as a session or a data flow) resource authentication, network address translation (Network Address Translation, NAT), and a QoS management function of an IMS local access network, to provide end-to-end service guarantee for the IMS.

In future communication, for example, in a 6th generation (6th generation, 6G) network, the multimedia system entry network element may still be the P-CSCF or have another name. This is not limited in this application.

3. A media plane (media plane) network element is also referred to as a media plane function network element, and is a function network element that can provide a media plane service. The media plane network element may provide a media stream transmission service for a terminal device by using a media capability of the media plane network element. The media plane network element exposes the media capability of the media plane network element to another network entity (for example, a control plane network element) through an SBI, so that another network entity can indirectly provide the media stream transmission service for the terminal device. For example, the media plane network element may include an access-side media processing network element, a central-side media processing network element, and an interworking-side media processing network element. The access-side media processing network element may implement functions such as user media access proxy and forwarding, NAT traversal, and audio codec conversion. For example, the access-side media processing network element includes an IMS access gateway (IMS Access gateway, IMS-AGW). The interworking-side media processing network element can implement media interworking between an IMS and another network. For example, the interworking-side media processing network element may include a transition gateway (transition gateway, TrGW), which is configured to implement interworking between the IMS and a media plane of another IP network. For another example, the interworking-side media processing network element may include an IP multimedia gateway (IP multimedia media gateway, IM-MGW), which may implement interworking between an IMS network and a media plane of another non-IP network. The central-side media processing network element may provide media resources for the media plane service, for example, a sound playing resource, a number receiving resource, a voice conference resource, a DC resource, and an XRM resource. For example, the central-side media processing network element may include a multimedia resource function processor (multimedia resource function processor, MRFP). It may be understood that, an example in which the MRFP is deployed on a central side is used herein. In some embodiments, the MRFP may alternatively be deployed on an access side. In other words, the access-side media processing network element may also include the MRFP. It may be understood that, the media plane network element may be a physical network element, or may be a logical network element (or a virtual network element).

Based on types of media plane services that can be provided, the media plane network element may be classified into a converged media plane network element and a non-converged media plane network element. The converged media plane network element is a media plane network element that can provide a plurality of media plane services, for example, a media plane network element providing both an access-type service and a resource-type service. The non-converged media plane network element is a network element providing a single media plane service, for example, a media plane service providing only the access-type service.

In embodiments of this application, the media plane network element may be a unified media plane network element or a unified media plane function (unified media function, UMF) network element in a 3GPP standard specification. It may be understood that, a specific name of the media plane network element is not limited in embodiments of this application. Unless otherwise specified, an example in which the media plane network element is the UMF network element is used. In other words, the UMF below may be replaced with the media plane network element.

Each UMF may register network function service (network function service, NFS) information of the UMF with an NRF network element. Different UMFs may provide different or the same media plane services.

As shown in FIG. 1, UMF_1, UMF_2, and UMF_3 are three UMFs. For example, media plane services that can be provided by UMF_1 include a conference service and a speech recognition service. Media plane services that can be provided by UMF_2 include a network address translation service, a sound playing service, and a media processing service. Media plane services that can be provided by UMF_3 include a network address translation service and a sound playing service. Correspondingly, each UMF further registers identification information of the UMF with the NRF network element.

For example, information registered by UMF_1, UMF_2, and UMF _3 with the NRF is shown in Table 1 below.

**Table 1**

| Network element | NFS |
|---|---|
| UMF_1 | Conference (Conference) |
| | Speech recognition (Automatic Speech Recognition, ASR) |
| UMF_2 | Network address translation (NAT) |
| | Media processing service (Media Processing Server, MPS) |
| | Playtone (Playtone) |
| UMF_3 | NAT |
| | Playtone |

The NRF may store information about each UMF. It may be understood that, the NRF may store NFS information of the UMF and identification information of the UMF in a corresponding manner, so that the NRF can determine a service that can be provided by each UMF. It may be understood that, the information about the UMF may further include other information in addition to the NFS information and the identification information. This embodiment of this application focuses on a media service that can be provided by each UMF. Therefore, other information of the UMF is not described.

The UMF may provide a media stream transmission service for UE_O, and may also provide the media stream transmission service for UE_T. In a call service process, UE_O, UE_T, and network elements such as the UMF, the NRF, PCSCF_O, and PCSCF_T in a network interact with each other. In this way, a necessary media transmission channel (or connection) between the UMF and UE_O and/or UE_T is established, so that the UMF provides the media stream transmission service for UE_O and/or UE_T. In embodiments of this application, a media endpoint that is on the UMF and that is interconnected with the UE is connected, by default, to a media endpoint that is on the UMF and that is interconnected with another UMF. It may also be understood as that, for a UMF, after receiving information, the media endpoint interconnected with the UE forwards, by default, the information to the media endpoint that is on the UMF and that is interconnected with the another UMF. For example, after receiving the information, the media endpoint interconnected with the UE may broadcast the information. Similarly, for a UMF, after receiving information, the media endpoint interconnected with the another UMF forwards, by default, the information to the media endpoint that is on the UMF and that is interconnected with the UE. For example, after receiving the information, the media endpoint interconnected with the another UMF may broadcast the information.

4. NRF: A network repository function network element may be configured to collect specific information of a network entity, for example, a service that can be provided by the network entity and identification information of a network implementation. For example, the network repository function network element may collect information such as a service that can be provided by a media plane network element. In a 5G communication system, the network repository function network element may be a network repository function (network repository function, NRF) network element defined in a 3GPP standard specification. In a future communication system (for example, a 6G communication system), the network repository function network element may still be the NRF, or may have another name. This is not limited in embodiments of this application.

5. AS: An application service network element may be configured to obtain information about an initially accessed media plane network element, or may request the media plane network element to provide a media plane service. In a 5G communication system, the application service network element may be an (application server, AS) network element. In a future communication system (for example, a 6G communication system), the application service network element may still be the AS, or may have another name. This is not limited in embodiments of this application.

The AS is an application layer device at a top layer of an IMS system. The AS interacts with a CSCF through a standard SIP protocol, to trigger and perform various network services and provide various service logic control functions.

In FIG. 1, the AS is classified into a calling-side AS (denoted as AS_O) and a called-side AS (denoted as AS_T); a PCSCF network element is classified into a calling-side PCSCF (denoted as PCSCF_O) and a called-side PCSCF network element (denoted as PCSCF_T); and a terminal device is classified into a calling-side terminal device (denoted as UE_O) and a called-side terminal device (denoted as UE_T). The UMF can be connected to the NRF, PCSCF_O, PCSCF_T, UE_O, and UE_T. The NRF can be connected to PCSCF_O and PCSCF_T. UE_O can be connected to PCSCF_O, and UE_T can be connected to PCSCF_T. AS_O can be connected to AS_T and PCSCF_O. AS_T can be connected to AS_O and PCSCF_T. For an interface between network elements in FIG. 1, refer to an existing interface protocol definition. Details are not described herein.

It may be understood that, FIG. 1 is merely an example. An IMS network to which embodiments of this application are applicable is not limited to including only the network elements shown in FIG. 1, and may further include another device not shown in FIG. 1, for example, an SCSCF. Examples are not listed one by one herein. In addition, a distribution form of each network element in FIG. 1 is merely an example, and the distribution form of each network element is not limited in embodiments of this application.

It may be understood that, the foregoing network elements may be network elements in a hardware device, or may be software functions running on dedicated hardware, or may be virtualization functions instantiated on a platform (for example, a cloud platform).

To facilitate understanding of the technical solutions in embodiments of this application, before the solutions in embodiments of this application are described, some terms or concepts that may be used in embodiments of this application are first briefly described.

First, some terms in embodiments of this application are described.
1. A media plane service is also referred to as a media service, and is a network service provided for a network entity (for example, a control plane network element) based on a service-based interface (service-based interface, SBI). A process of implementing the network service or providing the network service includes providing a media-related service, like a media stream transmission service or a media processing service, for a terminal device (a calling terminal device and/or a called terminal device) in a call service, for example, a color ring back tone service oriented to a terminal device of a call service initiator, and a customized ringing signal service oriented to a terminal device of a call service receiver. For example, the media plane service may be classified into three types: a resource-type service, an access-type service, and an interworking-type service. The three types of services are separately described as follows.

The resource-type service may also be referred to as a media application-type service or a media resource-type service. The resource-type service may also be understood as a service that needs to provide a media resource, for example, a number receiving (which refers to receiving a number entered on the terminal device, for example, a menu number) service, a sound playing (which refers to playing audio content to the terminal device) service, a voice conference service, a video conference service, a data channel (data channel, DC) service, and an extended reality manage (extended reality manage, XRM) service. Correspondingly, a process of implementing the resource-type service or providing the resource-type service includes providing a resource-type media stream transmission service, for example, a color ring back tone service, for the terminal device in the call service.

The access-type service mainly helps the terminal device in the call service implement NAT traversal of a media stream. Correspondingly, a process of implementing the access-type service or providing the access-type service includes providing an access-type media stream transmission service, for example, a NAT traversal service, for the terminal device in the call service.

The interworking-type service mainly helps the terminal device in the call service implement network address translation of the media stream, for example, translation between an IPv4 address and an IPv6 address, so that the terminal device exchanges the media stream with a peer network in the call service. Correspondingly, a process of implementing the interworking-type service or providing the interworking-type service includes providing an interworking-type media stream transmission service, for example, an address translation service, for the terminal device in the call service.

A network side device in embodiments of this application is a general term for a core network, a gateway, an access network device, and the like that are responsible for processing the media plane service. Devices specifically included in the network side device are described below by using examples, and details are not described herein.

2. Converged UMF and non-converged UMF: An independent UMF may be obtained by normalizing a plurality of media plane network elements, and is referred to as the converged UMF. Relatively, if one UMF is not obtained by normalizing the plurality of media plane network elements, the UMF is the non-converged UMF. Alternatively, it may be understood that, the converged UMF can provide a plurality of types of media plane services, and the non-converged UMF provides one type of media plane service.

3. Media resources refer to computer resources used by an MRFP to provide a resource-type service, for example, resources used by a central-side media processing network element to provide the resource-type service. For example, the media resources may include a sound playing resource, a number receiving resource, a voice conference resource, a video stream resource, a DC service resource, and an XRM service resource.

4. A media capability refers to a capability of providing a media plane service or a capability of providing a media resource needed by a media plane service, and indicates whether a media plane network element can provide media resources. For example, that the media plane network element has a media access capability may also be understood as that the media plane network element can implement a user media access function. For another example, that the media plane network element has a capability of interworking with an IP network may also be understood as that the media plane network element can implement interworking between an IMS network and a media plane of another IP network.

5. Media processing (operation) includes media service processing (operation), media access processing (operation), and media interworking processing (operation). The media service processing (operation) mainly refers to processing related to functions such as a sound playing function, a number receiving function, a voice conference function, a DC function, and an XRM function that are provided by the central-side media processing network element. The media access processing (operation) mainly includes access processing provided by an access-side media processing network element, and the media interworking processing (operation) mainly includes interworking processing provided by an interworking-side media processing network element.

6. A media endpoint is a logical entity located in a media gateway, for example, a media plane network element, and may send/receive a media stream and/or a control stream.

For example, the media endpoint may be represented by using an IP port or an asynchronous transfer mode (asynchronous transfer mode, ATM) port. The IP port includes an IP address and a port number. For details, refer to related content of the H248 protocol.

Specifically, the media plane network element provides a service (for example, the foregoing access-type service or the resource-type service) by using the media endpoint. To provide a service, the media plane network element needs to establish a media transmission channel between a media endpoint (namely, a local end) on the media plane network element and a media endpoint (namely, a peer end) on another network element entity (or UE). Therefore, the media endpoint may be understood as one end of the media transmission channel, and information about the media endpoint includes quintuple information, such as a local address (a local IP address and a local port number), a peer address (a peer IP address and a peer port number), and a protocol.

7. A session description protocol (session description protocol, SDP) is designed to describe a multimedia session, and is mainly used to describe session announcement, session invitation, or multimedia session initialization in another form. To initialize the multimedia session, media information, a transmission address, and the like need to be provided for a participant. The SDP provides a standard form for describing the information.

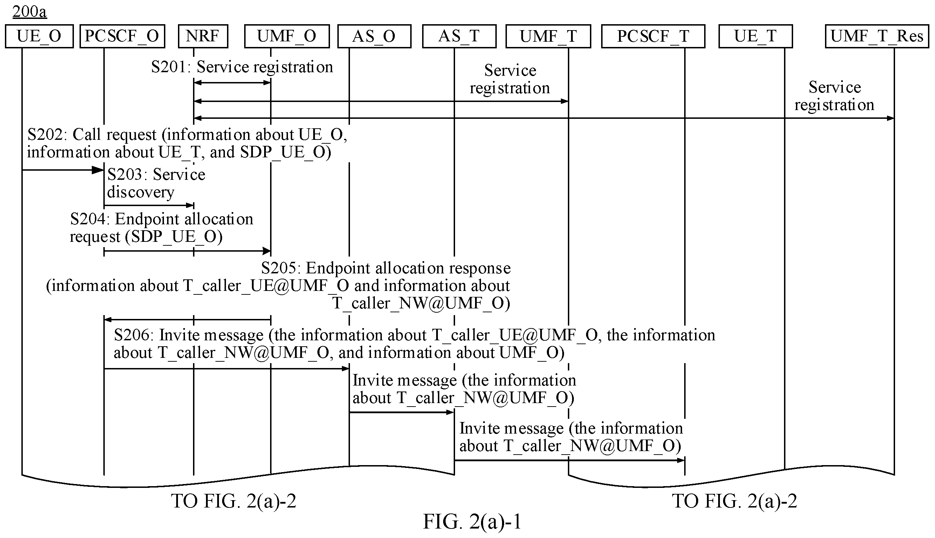

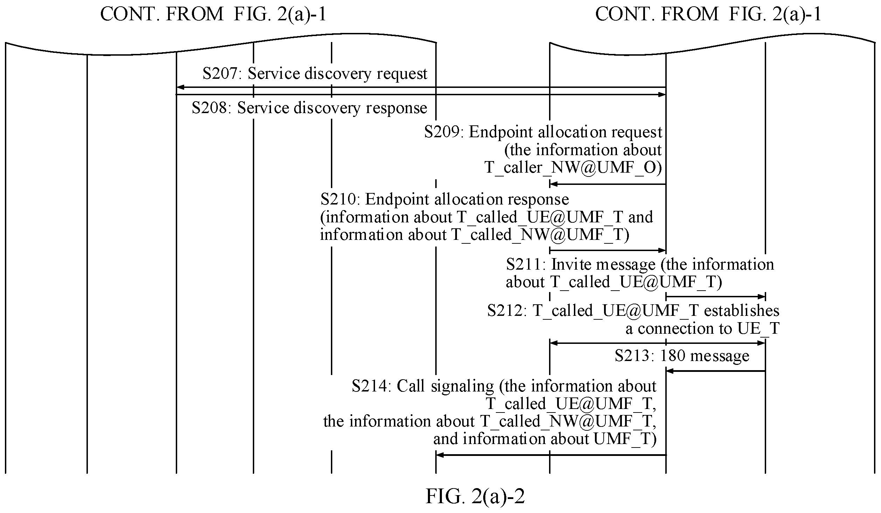

The foregoing mainly describes a scenario to which embodiments of this application are applicable and related basic concepts. For ease of understanding, the following briefly describes, with reference to FIG. 2(a)-1 to FIG. 2(c) to FIG. 4, how to select a UMF providing an access-type service and a UMF providing a resource-type service in an IMS architecture.

For example, a scenario in which a called AS plays a special ring back tone for a calling party in a basic call is used as an example to describe a procedure of implementing a media service in the IMS architecture. An example in which the communication method is applied to the architecture shown in FIG. 1 is used. In FIG. 2(a)-1 to FIG. 2(c) (FIG. 2(a)-1 and FIG. 2(a)-2 to FIG. 2(c)), T_caller_UE@UMF_O refers to a media endpoint T_caller_UE in UMF_O. Similarly, T_caller_NW@UMF_O refers to a media endpoint T_caller_NW in UMF_O, and T_called_UE@UMF_T refers to a media endpoint T_called_UE in UMF_T; T_called_NW@UMF_T refers to a media endpoint T_called_NW in UMF_T; and T_called_media@UMF_T_Res refers to a media endpoint T_called_media in UMF_T_Res. UMF_T in FIG. 2(a)-1 to FIG. 2(c) is a UMF providing an access-type service in embodiments of this application. UMF_T_Res is a network element providing a special ring back tone service in embodiments of this application. In the embodiment shown in FIG. 2(a)-1 to FIG. 2(c), a sound playing service is one of the resource-type services described in embodiments of this application. Correspondingly, a service used by UE_T to access a network is the access-type service. In FIG. 2(a)-1 to FIG. 2(c), a thin line indicates that signaling is exchanged, and a thick line indicates that a media stream is exchanged.

In this example, a resource-type service provided by an IMS is a special ring back tone service. The special ring back tone service is a different ring back tone that a called terminal device expects to play to a specific calling terminal device. To implement the special ring back tone service, the special ring back tone service needs to be triggered on AS_T on a called terminal device side.

It should be understood that, another resource-type service processing procedure is the same as a service procedure of the special ring back tone shown in FIG. 2(a)-1 to FIG. 2(c), provided that playing the special ring back tone for the calling party by called AS_T may be replaced with a corresponding media service. Examples are not described one by one again.

Specifically, the playing the special ring back tone for the calling party by called AS_T includes a procedure of receiving a call request and returning a 180 message, and a procedure of playing the special ring back tone. There are two possible procedures of playing the special ring back tone, for example, different procedures of playing the special ring back tone depending on whether the UMF providing the access service and the UMF providing the special ring back tone are a same UMF.

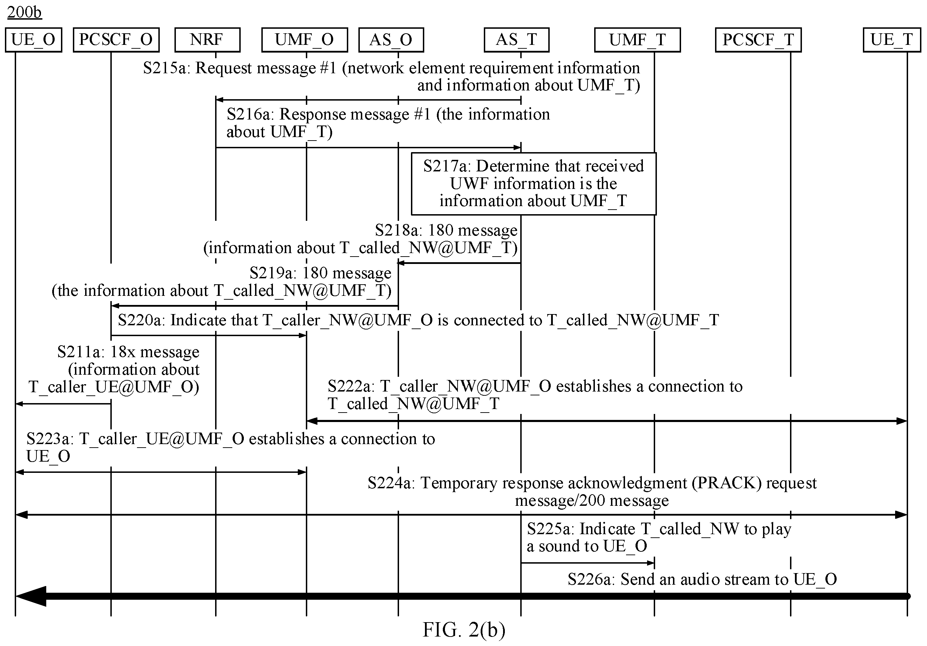

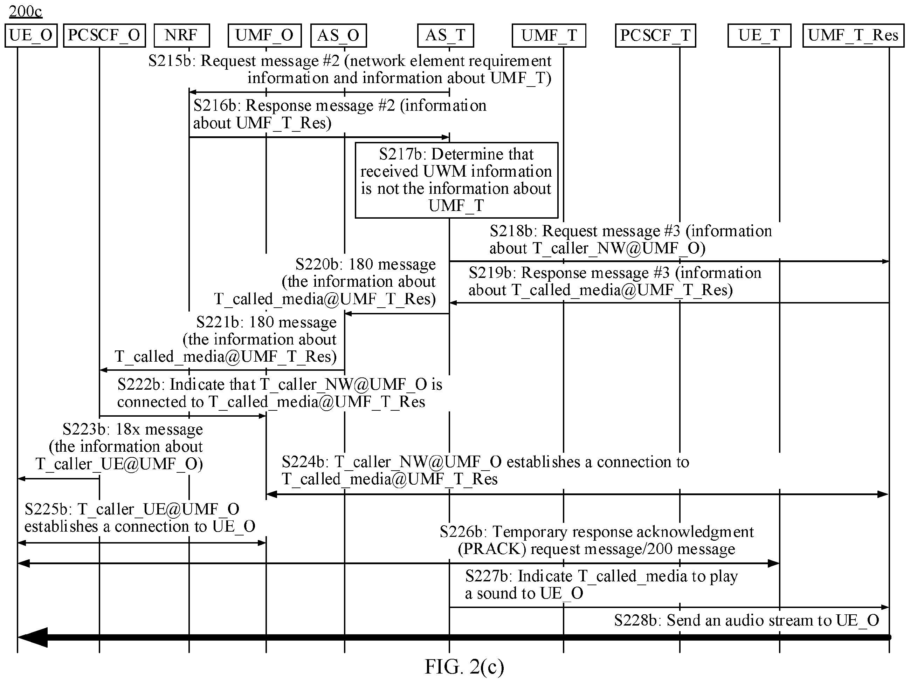

For ease of description, the following describes, with reference to in FIG. 2(a)-1 and FIG. 2(a)-2, a procedure in which the calling party initiates a call request and the called party returns the 180 message; with reference to FIG. 2(b), a procedure of playing the special ring back tone when the UMF providing the access service and the UMF providing the special ring back tone are the same UMF; and with reference to FIG. 2(c), a procedure of playing the special ring back tone when the UMF providing the access service and the UMF providing the special ring back tone are not the same UMF.

FIG. 2(a)-1 and FIG. 2(a)-2 are a schematic flowchart of a procedure of receiving a call request and returning a 180 message. The following steps are included.

S201: Each UMF initiates service registration to an NRF.

The UMF may send a registration request to the NRF, where the registration request may include information about the UMF. After obtaining the information about the UMF from the registration request, the NRF may store the information about the UMF. The information about the UMF may include information about a service that can be provided by the UMF. The information about the UMF also includes information identifying the UMF, for example, an ID or an IP address of the UMF. It may be understood that, there is a correspondence between NFS information of the UMF and identification information of the UMF, so that the NRF may determine, based on the identification information of the UMF, a service that can be provided by each UMF. As shown in FIG. 2(a)-1 and FIG. 2(a)-2, UMF_O may initiate service registration to the NRF, and UMF_T and UMF_T_Res may also initiate registration requests to the NRF.

S202: UE_O sends a call request to PCSCF_O, and correspondingly, PCSCF_O receives the call request sent by UE_O.

For example, the call request is an invite (invite) message in a call procedure. The call request may include information about UE_O, information about UE_T, and session description protocol (session description protocol, SDP) information related to the call request. It may be understood that, an SDP is specific to UE_O. For ease of description, SDP information included in the call request is denoted as SDP_UE_O. It may be understood that, SDP_UE_O may include media information of UE_O, for example, a media type (audio, a time frequency, and the like), a media format (an H264 video and the like), a transmission address, and a port.

S203: PCSCF_O initiates service discovery to the NRF, where the service discovery request is used to request the information about the UMF providing an access-type service for UE_O.

For example, PCSCF_O sends the service discovery request to the NRF. Correspondingly, the NRF receives the service discovery request sent by PCSCF_O. The service discovery request may be used to request the UMF that can provide the access-type service. It may be understood that, information about a plurality of UMFs is registered on the NRF. Different UMFs may have different capabilities, can provide different media resources, and can provide different media stream transmission services. After receiving the service discovery request sent by PCSCF_O, the NRF may interrogate a capability of each UMF, to determine a media stream transmission service that can be provided by each UMF. Specifically, the NRF may obtain stored capability information of each UMF, where the capability information may indicate the media service that can be provided by the UMF, so that the NRF determines, based on the capability information of each UMF, the UMF that can provide the access-type service. FIG. 2(a)-1 and FIG. 2(a)-2 are used as an example. The NRF determines that the UMF that can provide the access-type service for UE_O is UMF_O.

After determining UMF_O, the NRF may provide information about UMF_O for PCSCF_O. For example, the NRF sends a service discovery response to PCSCF_O, where the service discovery response includes the information about UMF_O, for example, identification information and an IP address of UMF_O.

S204: PCSCF_O sends an endpoint allocation request to UMF_O, and correspondingly, UMF_O receives the endpoint allocation request sent by PCSCF_O.

The endpoint allocation request may be used to request UMF_O to allocate a media endpoint, or request to obtain information about a media endpoint of UMF_O, for example, an IP address and a port of the media endpoint of UMF_O. In this way, UE_O accesses a network based on the media endpoint allocated by UMF_O.

The endpoint allocation request may include SDP information, namely, SDP_UE_O in a first call request. UMF_O may determine, based on SDP_UE_O, a media endpoint (which may be denoted as T_caller_UE) interconnected with UE_O, and determine a media endpoint (denoted as T_caller_NW) interconnected with another UMF (UMF_T is used as an example in embodiments of this application).

S205: UMF_O sends an endpoint allocation response to PCSCF_O, and correspondingly, PCSCF_O receives the endpoint allocation response sent by UMF_O.

The endpoint allocation response may include the information about the media endpoint allocated by UMF_O. For example, UMF_O may allocate two media endpoints, namely, T_caller_UE and T_caller_NW. T_caller_NW is a media endpoint that is on UMF_O and that is interconnected with UMF_T. The endpoint allocation response may include information about T_caller_UE and information about T_caller_NW. As shown in FIG. 2(a)-1 and FIG. 2(a)-2, the endpoint allocation response includes information about T_caller_UE@UMF_O and information about T_caller_NW@UMF_O. The information about T_caller_UE may include an IP address and a port number of T_caller_UE. The information about T_caller_NW may include an IP address and a port number of T_caller_NW.

S206: PCSCF_O sends the invite message, and PCFCS_T receives the invite message.

PCSCF_O may modify an IP address in the received SDP information to an IP address of T_caller_NW (denoted as IP_er_NW), and construct a header field of local media information (denoted as local-media), for example, local-media: T_caller_UE="UMF-beijing-haidian2\T-1"; and T_caller_NW="UMF-beijing-haidian2\T-2", and UMF_ori="UMF-beijing-haidian2". It may be understood that, an information element T_caller_UE may indicate information about T_caller_UE, an information element T_caller_NW may indicate information about T_caller_NW, and an information element UMF_ori indicates information about UMF_O.

Then, PCSCF_O forwards the invite message to PCSCF_T. It may be understood that, PCSCF_O forwards the invite message to PCSCF_T by using a plurality of network elements. The plurality of network elements include an O-side network element and a T-side network element. The O-side network element deletes local-media from the invite message when forwarding the invite message to the T-side network element.

It may be understood that, similar to UE_O, UE_T may also request to access a network. To be specific, UE_T sends a request to a T-side control plane network element, and PCSCF_T receives the request from UE_T, and requests, from the NRF, for the UMF that can provide the access-type service for UE_T. The NRF may determine that the UMF that can provide the access-type service for UE_T is UMF_T. Subsequently, similarly, PCSCF_O and PCSCF_T may also request UMF_T to allocate a media endpoint.

S207: PCSCF_T sends the service discovery request to the NRF, and correspondingly, the NRF receives the service discovery request sent by PCSCF_T, where the service discovery request is used to obtain the information about the UMF that has a needed access capability.

S208: The NRF sends the service discovery response to PCSCF_T, and correspondingly, PCSCF_T receives the service discovery response sent by the NRF, where the service discovery response indicates the UMF that has the needed access capability. For example, the service discovery response includes information about UMF_T.

S209: PCSCF_T sends the endpoint allocation request to UMF_T, and correspondingly, UMF_T receives the endpoint allocation request sent by PCSCF_T.

The endpoint allocation request may include information about T_caller_NW@UMF_O, for example, the IP address of T_caller_NW. The endpoint allocation request may include the SDP information, and the SDP information includes the information about T_caller_NW@UMF_O.

S210: UMF_T sends the endpoint allocation response to PCSCF_T, and correspondingly, PCSCF_T receives the endpoint allocation response sent by UMF_T.

The endpoint allocation response may include the information about the media endpoint allocated by UMF_T. For example, UMF_Tmay allocate two media endpoints, namely, T_called_UE and T_called_NW. T_called_UE is a media endpoint that is on UMF_T and that is interconnected with UE_T, and T_called_NW is a media endpoint that is on UMF_T and that is interconnected with another UMF (UMF_O is used as an example in embodiments of this application). The endpoint allocation response includes information about T_called_UE@UMF_T and information about T_called_NW@UMF_T. The information about T_called_UE@UMF_T includes an IP address and a port number of T_called_UE. The information about T_called_NW@UMF_T includes an IP address and a port number of T_called_NW.

S211: PCSCF_T sends the invite message to UE_T, and correspondingly, UE_T receives the invite message sent by PCSCF_T.

After receiving the invite message sent by AS_T, PCSCF_T may modify the IP address in the SDP information included in the invite message to the IP address of T_called_UE of UMF_T, and then forward the invite message to UE_T. That is, the invite message sent by PCSCF_T to UE_T includes the information about T_called_UE@UMF_T, for example, the IP address and the port number of T_called_UE.

S212: UE_T establishes a connection to T_calledUE of UMF_T.

After receiving the invite message, UE_T may determine, based on the SDP information in the invite message, that an endpoint that is on UMF_T and that is interconnected with UE_T is T_called_UE, to establish a connection to T_called_UE of UMF_T.

S213: UE_T sends the 180 message to PCSCF _T, and correspondingly, PCSCF_T receives the 180 message sent by UE_T. The 180 message includes the information about T_called_UE@UMF_T.

S214: AS_T receives call signaling.

The call signaling is associated with a call service between UE_O and UE_T. It may be understood that, an access-type control plane network element or an interworking-type control plane network element is triggered by call signaling of UE_T to send the call signaling to AS_T. The call signaling may be the 180 message in the call procedure.

The call signaling includes information about a media plane network element used to provide a media plane service for the call service and information about a media endpoint of the media plane network element, for example, an IP address and a port number of the media endpoint. For example, after receiving the 180 message, PCSCF_T may construct a header field of local-media, for example, local-media: T_called_UE="UMF-beijing-haidian1\T-1"; and T_called_NW="UMF-beijing-haidian1\T-2", and UMF_ori="UMF-beijing-haidian1". It may be understood that, an information element T_called_UE may indicate information about T_called_UE, an information element T_called_NW may indicate information about T_called_UE, and an information element UMF_ori indicates information about UMF_T. Then, PCSCF_T forwards the 180 message, namely, the call signaling after local-media is constructed. It can be learned that, the call signaling carries the information about T_called_UE of UMF_T and the information about T_calledNW of UMF_T.

It may be understood that, the call signaling received by AS_T may be the call signaling forwarded by PCSCF_T and an SCSCF. That AS_T receives the call signaling may be that AS_T receives one piece of signaling. For example, the signaling includes the information about T_called_NW@UMF_T, the information about T_called_UE@UMF_T, the information about UMF_T, and the information about T_caller_UE@UMF_O. Alternatively, that AS_T receives the call signaling may be that AS_T receives a plurality of pieces of signaling. For example, AS_T separately receives two pieces of signaling, where one piece of signaling includes the information about T_called_NW@UMF_T, the information about T_called_UE@UMF_T, and the information about UMF_T, and the other piece of signaling includes the information about T_caller_UE@UMF_O. It may also be understood as that, the information about T_caller_NW@UMF_O and the information about UMF_T may be carried in one piece of signaling, or may be carried in different pieces of signaling.

Specifically, after the procedure shown in FIG. 2(a)-1 and FIG. 2(a)-2 ends, AS_T may choose to provide a special ring back tone service for the UMF that has the special ring back tone capability.

As a possible implementation, the UMF providing the access service and the UMF providing the special ring back tone are the same UMF. FIG. 2(b) shows a procedure of playing the special ring back tone. The following steps are included.

S215a: AS_T sends a request message #1 to the NRF, and correspondingly, the NRF receives the request message #1 sent by AS_T.

For example, after receiving the call signaling, AS_T determines, based on information in the call signaling, for example, an identifier of UE_O or UE_T, that a sound needs to be played to UE_O (for example, because a user of UE_T has subscribed to a "sound playing" value added service, namely, a color ring back tone service), and further determines that a UMF that can play a sound to UE_O is needed. Therefore, AS_T may send the request message #1 to the NRF, to request to obtain the UMF that can provide the sound playing service. This is because if UMF_T initially selected for UE_T is still used to provide the sound playing service for UE_O or UE_T, the sound playing service may not be provided due to a capability limitation of UMF_T. That is, UMF_T is used to provide the sound playing service by default, which may cause a failure of the sound playing service. For example, UMF _T is UMF_1 in FIG. 1. Media plane services that can be provided by UMF_1 include a conference service and a speech recognition service, and the sound playing service cannot be supported. If UMF_T is used to provide the sound playing service for UE_O by default, the sound playing service fails. Specifically, AS_T may send the request message #1 to the NRF, where the request message #1 is used to request a media plane network element that can support the sound playing service required by AS_T.

It may be understood that, a specific name of the request message #1 is not limited in embodiments of this application. For example, the request message #1 may be a service discovery request message.

It may be understood that, if UMF_T can also provide the sound playing service, UMF_T may be preferentially selected to provide the sound playing service. This is because UMF_T has allocated the media endpoints, namely, T_called_UE and T_called_NW in a process in which UE_T accesses the network. Therefore, a media transmission channel between UMF_T and UE_O may be established by using T_called_NW, and a procedure of requesting to allocate the media endpoint does not need to be triggered again, so that a delay of providing the sound playing service can be reduced. Therefore, when UMF_T can provide the sound playing service, the NRF may preferentially select UMF_T to provide the sound playing service, to reduce the delay as much as possible.

Optionally, to enable the NRF to preferentially consider UMF_T as the target UMF providing the sound playing service, AS_T may provide the information about UMF_T for the NRF, to indicate the NRF to preferentially consider UMF_T. For example, the request message #1 further includes preferred network element information, and the preferred network element information indicates an initially selected UMF. For example, the initially selected UMF is UMF_T. For example, the preferred network element information may include an ID or an IP address of UMF_T. It should be understood that, the call signaling received by AS_T includes the information about UMF_T, and is provided for the NRF through the request message #1.

That the preferred network element information includes the information about UMF_T may also be understood as that the preferred network element information implicitly indicates that UMF_T is used as the target UMF when both UMF_T and UMF_T_Res can provide the sound playing service. In other words, the target UMF and UMF_T may be a same network element, or the target UMF and UMF_T may be different network elements. In FIG. 2(b), an example in which the target UMF is UMF_T is used.

The request message #1 includes network element requirement information. The network element requirement information may indicate information about a needed media plane service, for example, information about the sound playing service. The information about the sound playing service may include a value indicating the UMF that needs to have the sound playing service, to indicate that the UMF that can provide the sound playing service is needed. Optionally, the network element requirement information may alternatively indicate information about a needed media plane network element. The NRF may select a proper media plane network element (referred to as a target media plane network element) for the sound playing service based on the network element requirement information, for example, UMF _T in FIG. 2(b). Specifically, the request message #1 may be an HTTP request message. In an example, the HTTP request message may be:

```
GET/nnrf-disc/v1/nf-instances?requester-nf-type=AS&target-nf-type=UMF HTTP/2.0
host: 10.2.102.10:31070
content-type: application/json
content-length: 44
accept-encoding: gzip
user-agent: Go-http-client/2.0
{
            ...
            "PreferredUMF": "UMF-beijing-haidian1", //preferred network element information
            "RequiredUMF": "nnrf-umf-playtone"; //network element requirement information...
}
```

"PreferredUMF" indicates that an initially selected UMF is a preferentially selected UMF. For example, a value of "PreferredUMF" may be information about the initially selected UMF (for example, UMF_T in this example). For example, a value of "PreferredUMF" is "UMF-beijing-haidian1", indicating an initially accessed UMF carried in the 180 message. "RequiredUMF" indicates the UMF providing the resource-type service is needed. For example, a value of "RequiredUMF" is "playtone", indicating that the UMF that has a capability of "playing a sound to a calling UE" is required.

S216a: The NRF sends a response message #1 to AS_T, and correspondingly, AS_T receives the response message #1 sent by the NRF.

The NRF determines, from the plurality of UMFs based on the preferred network element information and the network element requirement information, the target UMF that can provide the sound playing service, namely, UMF_T. After determining the target UMF, the NRF sends the response message #1 to AS_T, where the response message #1 may indicate the target UMF.

For example, the NRF may obtain stored NFS information of each UMF, to determine, based on the NFS information of each UMF, the UMF that can provide the sound playing service. First, the NRF may preferentially obtain capability information of UMF_T based on the preferred network element information, to determine, based on the capability information of UMF_T, whether UMF_T can provide the sound playing service. If UMF_T can provide the sound playing service, the NRF determines UMF_T as the target UMF. In other words, the target UMF and UMF_T are a same network element. In FIG. 2(b), a case in which the target UMF and UMF_T are the same network element is mainly considered.

If the target media plane and UMF_T are the same network element, the response message #1 may include the information about UMF_T, for example, the ID or the IP address of UMF_T. Alternatively, the response message #1 may include a feedback indication. If the response message #1 includes the feedback indication, for AS_T, the target UMF may be UMF_T by default.

The response message #1 may be an HTTP response message. In an example, the HTTP response message may be:

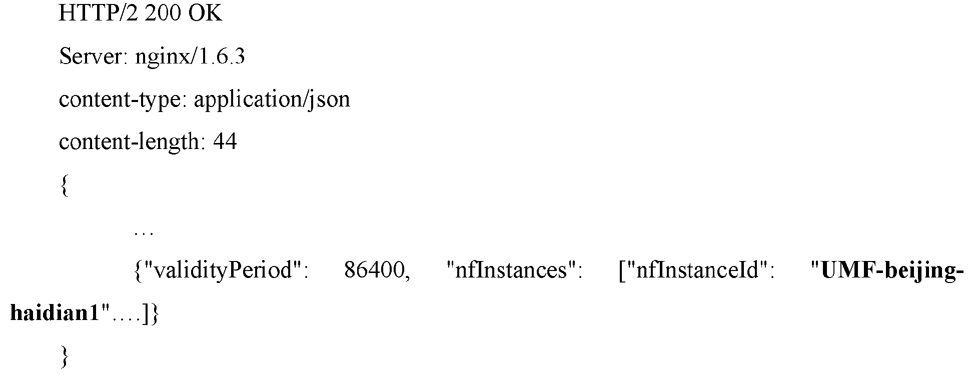

The field "nfInstances" represents the information about the UMF (namely, UMF_T) that meets a sound playing service requirement. "nfInstanceId" is a field belonging to the field "nflnstances", representing an ID that uniquely identifies the UMF. For example, a value of "nfInstanceId" is the "**UMF-beijing-haidian1**" (which is consistent with a specified value in the request message #1).

S217a: AS_T determines that the target UMF and UMF_T are the same network element. In a case shown in FIG. 2(b), AS_T may determine, based on information included in the received response message #1, that the target UMF providing the resource-type service and UMF_T providing the access-type service are the same network element.

S218a: AS_T sends the 180 message to AS_O, and correspondingly, AS_O receives the 180 message sent by AS_T.

AS_T receives the response message #1, may construct the SDP information, to be specific, assign the IP address of T_called_NW of UMF_T as a value to the IP address in the SDP information, assign the port number of T_called_NW of UMF_T as a value to a port in the SDP information, and then sends the 180 message including the SDP information to AS_O.

It may be understood as that, AS_T may transfer the IP address of T_called_NW to AS_O through the 180 message. For example, AS_T may send the 180 message carrying the IP address of T_called_NW to SCSCF_T, and SCSCF_T forwards the 180 message carrying the IP address of T_called_NW to SCSCF_O. SCSCF_O forwards the 180 message carrying the IP address of T_called_NW to AS_O.

S219a: AS_O sends the 180 message to PCSCF_O, and correspondingly, PCSCF_O receives the 180 message sent by AS_O.

Content carried in the 180 message is the same as that carried in the 180 message in S419, that is, the 180 message also includes the information about T_called_NW of UMF_T.

S220a: PCSCF_O indicates, to UMF_O, that T_caller_NW of UMF_O is connected to T_called_NW of UMF_T.

S221a: PCSCF_O sends a 18x message to UE_O, and correspondingly, UE_O receives the 18x message sent by PCSCF_O.

PCSCF_O may replace the IP address in the SDP information included in the 180 message received from AS_O with the IP address of T_caller_UE, generate a new 18x message, and then forward the new 18x message to UE_O. For example, the 18x message may be a 183 message.

S222a: T_caller_NW of UMF_O establishes a connection to T_called_NW of UMF_T.

It may be understood that, when T_caller_NW is connected to T_called_NW, a channel connection between UMF_O and UMF_T may be implemented, to implement a channel connection between UE_O and UMF_T.

S223a: T_caller_UE of UMF_O establishes a connection to UE_O.

S224a: UE_O and UE_T exchange a PRACK request message/200 message.

The PRACK request message/200 message is carried by two pieces of signaling. One piece of signaling is used to carry the PRACK request message, and the other piece of signaling is used to carry the 200 message. The 200 message may be considered as a response message of the PRACK request message. The PRACK request message/200 message is exchanged between UE_O and UE_T, to indicate that a connection has been established between T_caller_NW of UMF_O and T_called_NW of UMF_Ts. UE_O receives the 18x message from PCSCF_O, and may send the PRACK request message/200 message to PCSCF_O, and PCSCF_O sends the PRACK request message/200 message to AS_O. AS_O receives the PRACK request message/200 message, and sends the PRACK request message/200 message to AS_T. AS_T receives the PRACK request message/200 message, and may determine that a connection has been established between T_caller_NW of UMF_O and T_called_NW of UMF_T.

S225a: AS_T indicates UMF_T to play a sound to UE_O.

For example, in response to determining that the connection has been established between T_caller_NW of UMF_O and T_called_NW of UMF _T, AS_T may send indication information to UMF_T, where the indication information may indicate UMF_T to provide the sound playing service. It may also be understood as that, the indication information may indicate UMF_T to start sound playing. The indication information may include the information about T_called_NW of UMF_T, to indicate T_called_NW to play a sound to UE_O.

S226a: UMF_T sends an audio stream to UE_O.

After receiving the indication information, UMF_T sends the audio stream to UE_O.

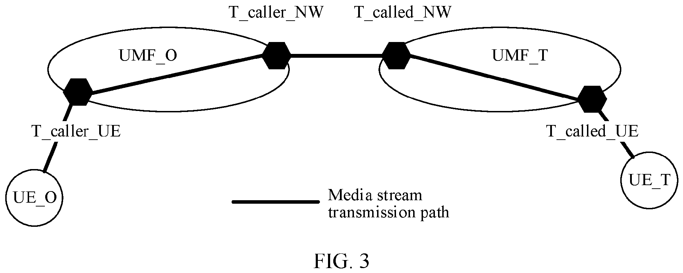

For example, in a case shown in FIG. 2(b), the media transmission channel is shown in FIG. 3. FIG. 3 is a diagram of establishing a connection of a media transmission channel. In FIG. 3, UMF_O is a UMF that can provide both an access-type media stream transmission service for UE_O and a resource-type media stream transmission service for UE_T and/or UE_O. UMF _T is a UMF that can provide both the access-type media stream transmission service for UE_T and the resource-type media stream transmission service for UE_O/UE_T. It may also be understood as that, the UMF that can provide the resource-type media stream transmission service for UE_T is the UMF that is initially selected for UE_T and that provides the access-type media stream transmission service. The UMF that can provide the resource-type media stream transmission service for UE_O is the UMF that is initially selected for UE_O and that provides the access-type media stream transmission service. In this case, UMF_T has allocated a media endpoint (denoted as T_called_UE) interconnected with UE_T and a media endpoint (denoted as T_called_NW) interconnected with another UMF when UE_T joins a call session. Therefore, PCSCF_T does not need to trigger a procedure of requesting UMF_T to allocate an endpoint. Similarly, PCSCF_O does not need to trigger a procedure of requesting UMF_O to allocate an endpoint.

As another possible implementation, the UMF providing the access service and the UMF providing the special ring back tone are not the same UMF. FIG. 2(c) shows another procedure of playing the special ring back tone. The following steps are included.

S215b: AS_T sends a request message #2 to the NRF, and correspondingly, the NRF receives the request message #2 sent by AS_T.

Specifically, the request message #2 is the same as the request message #1 shown in S215a. Details are not described herein again. A difference between the procedure shown in FIG. 2(c) and the procedure shown in FIG. 2(b) lies in that an example in which the target UMF is UMF_T_Res is used.

S216b: The NRF sends a response message #2 to AS_T, and correspondingly, AS_T receives the response message #2 sent by the NRF.

The NRF determines, from the plurality of UMFs based on the preferred network element information and the network element requirement information, the target UMF that can provide the sound playing service, namely, UMF_T_Res. After determining the target UMF, the NRF sends the response message #2 to AS _T, where the response message #2 may indicate the target UMF.

For example, the NRF may obtain stored NFS information of each UMF, to determine, based on the NFS information of each UMF, the UMF that can provide the sound playing service. First, the NRF may preferentially obtain capability information of UMF_T based on the preferred network element information, to determine, based on the capability information of UMF_T, whether UMF_T can provide the sound playing service. If UMF_T can provide the sound playing service, the NRF determines UMF_Tas the target UMF. In other words, the target UMF and UMF_T are a same network element. On the contrary, if UMF_T cannot provide the sound playing service, the NRF obtains stored capability information of the another UMF to select the UMF that can provide the sound playing service. That is, the NRF may select the UMF that can provide the sound playing service as the target UMF. In this case, the target UMF and UMF_T are not the same network element. The NRF preferentially selects UMF_T, to reduce a delay of the sound playing service as much as possible when reducing sound playing service failures.

It is assumed that UMF _T is a UMF 1 in FIG. 1. The NRF may obtain capability information of UMF_1, and determine that UMF_1 cannot provide the sound playing service. Subsequently, the NRF may obtain capability information of UMF_2 and capability information of UMF _3, to determine that services that can be provided by UMF_2 include a network address translation service, a sound playing service, and a media processing service, and services that can be provided by UMF_3 include a network address translation service and a sound playing service. The network repository function network element may determine UMF_2 or UMF_3 as the target UMF, namely, UME_T_Res.

The response message #2 may be the HTTP response message. In an example, the HTTP response message may be:

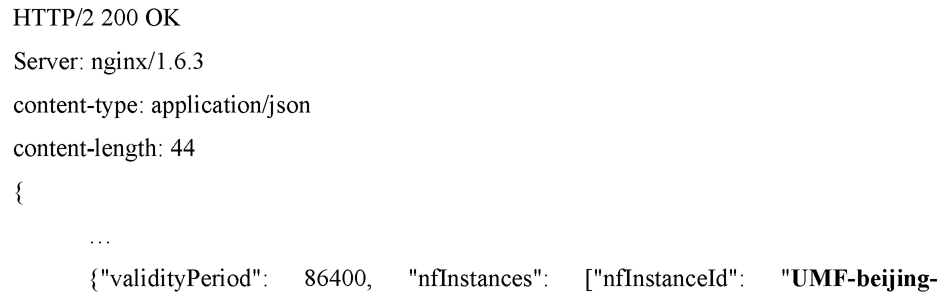

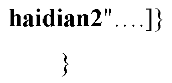

The field "nfInstances" represents the information about the UMF (namely, UMF_T_Res) that meets a sound playing service requirement. "nfInstanceId" is a field belonging to the field "nfInstances", representing an ID that uniquely identifies the UMF. For example, a value of "nfInstanceId" is "**UMF-beijing-haidian2**" (which is inconsistent with a specified value in the request message #2).

S217b: AS_T determines that the target UMF and UMF_T are not the same network element.

In a case shown in FIG. 2(c), AS_T may determine, based on information included in the received response message #2, that the target UMF providing the resource-type service and UMF_T providing the access-type service are not the same network element.

S218b: AS_T sends a request message #3 to UMF_T_Res, and correspondingly, UMF_T_Res receives the request message #3 sent by AS_T.

The request message #3 may be used to request UMF_T_Res to allocate a media endpoint (for example, referred to as a target media endpoint). The target media endpoint is T_called_media. It may also be understood as that, the request message #3 is used to request a target media endpoint providing the sound playing service, or is used to request information about the target media endpoint. The information about the target media endpoint may include an IP address and a port number that are used by UMF_T_Res to provide the sound playing service. It may be understood that, a specific name of the request message #3 is not limited in embodiments of this application. For example, the request message #3 may also be referred to as an endpoint allocation request message.

The request message #3 may include information about a media endpoint that is on UMF_O that is interconnected with a T-side UMF. For ease of description, the information about the media endpoint that is on UMF_O and that is interconnected with the T-side UMF is the information about T_caller_NW of UMF_O. For example, the request message #3 may include the SDP information, and the SDP information includes the IP address and the port number of T_caller_NW of UMF_O. UMF_T_Res receives the request message #3, and may allocate the target media endpoint, for example, T_called_media. Similar to the request message #2, the request message #3 is also HTTP information.

S219b: UMF_T_Res sends a response message #3 to AS_T, and correspondingly, AS_T receives the response message #3 sent by UMF_T_Res. The response message #3 may also be referred to as a service discovery response message.

The response message #3 may indicate the target media endpoint, namely, T_called_media allocated by UMF_T_Res to provide the sound playing service. For example, the response message #3 may include information about T_called_media of UMF_T_Res, for example, an IP address and a port number of T_called_media.

AS_T learns of the information about T_called_media of UMF_T_Res, and may forward the information about T_called_media to PCSCF_O. For example, AS_T may forward the information about T_called_media to AS_O, and then AS_O forwards the information about T_called_media to PCSCF_O.

S220b: AS_T sends the 180 message to AS_O, and correspondingly, AS_O receives the 180 message sent by AS_T.

AS_T receives the response message #3, may construct the SDP information, to be specific, assign the IP address of T_called_media of UMF_T_Res as a value to the IP address in the SDP information, and assign the port number of the T_called_media of the UMF_T_Res as a value to a port in the SDP information, and then sends the 180 message including the SDP information to AS_O. It may be understood as that, AS_T may transfer the IP address of T_called_media to AS_O through the 180 message. For example, AS_T may send the 180 message carrying the IP address of T_called_media to SCSCF _T, and SCSCF_T forwards the 180 message carrying the IP address of T_called_media to SCSCF_O. SCSCF_O forwards the 180 message carrying the IP address of T_called_media to AS_O.

S221b: AS_O sends the 180 message to PCSCF_O, and correspondingly, PCSCF_O receives the 180 message sent by AS_O.

Content carried in the 180 message is the same as that carried in the 180 message in S220a, that is, the 180 message also includes the information about T_called_media of UMF_T_Res.

S222b: PCSCF_O indicates, to UMF_O, that T_caller_NW of UMF_O is connected to T_called_media of UMF_T_Res.

S223b: PCSCF_O sends a 18x message to UE_O, and correspondingly, UE_O receives the 18x message sent by PCSCF_O.

PCSCF_O may replace the IP address in the SDP information included in the 180 message received from AS_O with the IP address of T_caller_UE, generate a new 18x message, and then forward the new 18x message to UE_O. For example, the 18x message may be a 183 message.

S224b: T_caller_NW of UMF_O establishes a connection to T_calledmedia of UMF_T_Res.

It may be understood that, when T_caller_NW is connected to T_called_media, a channel connection between UMF_O and UMF_T_Res may be implemented, to implement the channel connection between UE_O and UMF_T_Res.

S225b: T_caller_UE of UMF_O establishes a connection to UE_O.

S226b: UE_O and UE_T exchange a PRACK request message/200 message.

AS_T receives the PRACK request message/200 message, and may determine that a connection has been established between T_caller_NW of UMF_O and T_called_media of UMF_T_Res.

S227b: AS_T indicates UMF_T_Res to play a sound to UE_O.

For example, in response to determining that the connection has been established between T_caller_NW of UMF_O and T_called_media of UMF_T_Res, AS_T may send indication information to UMF_T_Res, where the indication information may indicate UMF_T_Res to provide the sound playing service. It may also be understood as that, the indication information may indicate UMF_T_Res to start sound playing. The indication information may include the information about T_called_media of UMF_T_Res, to indicate T_called_media to play a sound to UE_O.

S228b: UMF_T_Res sends an audio stream to UE_O.

After receiving the indication information, UMF_T_Res sends the audio stream to UE_O. For example, in a case shown in FIG. 2(b), the media transmission channel is shown in (a) in FIG. 4. (a) in FIG. 4 is another diagram of establishing a connection of a media transmission channel. (a) in FIG. 4 is another diagram of establishing a connection of a media transmission channel. In FIG. 4, an example in which UMF_O, UMF_T, UMF_T_Res, UE_O, and UE_T are included is used. An O-side (namely, a calling side) control plane network element may request a UMF to provide a media stream transmission service for UE_O and/or UE_T. UE_T may request, by using a T-side (namely, a called side) control plane network element, a network side to provide the media stream transmission service. UMF_O is a UMF that can provide both an access-type media stream transmission service for UE_O and a resource-type media stream transmission service for UE_T and/or UE_O. UMF_T is a UMF initially selected by the T-side control plane network element (for example, PCSCF_T) for the T-side when UE_T joins a call session, and can provide the access-type media stream transmission service for UE_O and/or UE_T. UMF_T_Res is the UMF that can provide the resource-type media stream transmission service for UE_O and/or UE_T. The initially selected UMF may also be understood as a UMF selected, for a side on which the PCSCF network element is located, when the PCSCF network element applies for a media endpoint for the first time in the call session process.

UMF_T allocates a media endpoint (denoted as T_called_UE) interconnected with UE_T and a media endpoint (denoted as T_called_NW) interconnected with another UMF when UE_T joins the call session. Similarly, UMF_O allocates a media endpoint (denoted as T_caller_UE) interconnected with UE_O and a media endpoint (denoted as T_caller_NW) interconnected with another UMF when UE_O joins the call session. In addition, in the foregoing access process, UE_T is connected to T_called_UE, and UE_O is connected to T_caller_UE. Therefore, when a connection is established between T_called_NW and T_caller_NW, a connection of a media transmission channel between UE_O and UE_T may be implemented.

However, when UMF_T_Res can provide the media stream transmission service for UE_T, because the initially selected UMF is UMF_T, PCSCF_T does not know a media endpoint on UMF_T_Res. In this case, PCSCF_T requests to obtain the media endpoint on UMF_T_Res, to implement a connection of the media transmission channel between UMF_T_Res and UE_O and/or UE_T. For example, PCSCF_T may request UMF_T_Res to allocate a media endpoint, UMF_T_Res may allocate the media endpoint T_called_media, and UMF_T_Res provides the media stream transmission service by using T_called_media. When T_called_media is connected to T_caller_NW, T_called_media may provide the media stream transmission service for UE_O.

It should be understood that, the foregoing is merely an example for description that UMF_T cannot provide the resource-type media stream transmission service. If UMF_O cannot provide the resource-type media stream transmission service, PCSCF_O may request UMF_O_Res to allocate a media endpoint, UMF_O_Res may allocate the media endpoint T_caller_media, and UMF_O_Res provides the media stream transmission service by using T_caller_media. When T_caller_media is connected to T_called_NW, T_caller_media may provide the media stream transmission service for UE_T. The media transmission channel is shown in (b) in FIG. 4. (b) in FIG. 4 is still another diagram of establishing a connection of a media transmission channel. For a specific case, refer to the descriptions in (a) in FIG. 4. A difference lies in that a resource-type service is provided for a calling side by UMF_O_Res. Details are not described herein again.

With reference to FIG. 2(a)-1 and FIG. 2(a)-2 to FIG. 2(c), the foregoing describes in detail the procedure in which the called AS plays the special ring back tone for the calling party. It can be learned from the foregoing that, for different scenarios (for example, whether the UMF providing the access service and the UMF providing the special ring back tone are the same UMF), the AS needs to perform different procedures (for example, perform the procedure shown in FIG. 2(b) or FIG. 2(c)). In other words, the AS needs to determine different processing procedures based on a determining result. This reduces processing efficiency of the AS.

For example, in FIG. 2(b), step S217a needs to be performed to determine that the received UMF information is the information about UMF_T, and after step S217a is performed, allocation of a new media endpoint does not need to be requested, step S218a to step S224a are directly performed to establish a connection between the media endpoints, and S225a is performed to indicate the media endpoint on UMF_T to perform a service.

For another example, in FIG. 2(c), step S217b needs to be performed to determine that the received UMF information is not the information about UMF_T but the information about UMF_T_Res, step S218b is performed to request UMF_T_Res to allocate a media endpoint, then step S220b to step S226b are performed to establish a connection between the media endpoints, and S227b is performed to indicate the media endpoint on UMF_T_Res to perform a service.

To resolve the foregoing problem of the low processing efficiency of the AS, this application provides a communication method, to simplify an operation of the AS in the procedure of providing the resource-type service, and improve the processing efficiency of the AS.

For ease of understanding embodiments of this application, the following points are described.

First, in this application, "indicate" may include "directly indicate" and "indirectly indicate". When a piece of indication information indicates A, the indication information may directly indicate A or indirectly indicate A, but it does not indicate that the indication information definitely carries A.

Information indicated by the indication information is referred to as to-be-indicated information. In a specific implementation process, the to-be-indicated information may be indicated in a plurality of manners, for example, but not limited to, a manner of directly indicating the to-be-indicated information. For example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or agreed on in advance. For example, specific information may alternatively be indicated by using an arrangement sequence of information that is pre-agreed on (for example, specified in a protocol), to reduce indication overheads to some extent. In addition, a common part of each piece of information may be further identified and indicated in a unified manner, to reduce indication overheads caused by separately indicating same information.

Second, "at least one" shown in this application means one or more, and "a plurality of" means two or more. In addition, in embodiments of this application, "first", "second", and various numbers (for example, "#1" and "#2") are merely used for differentiation for ease of description, and are not used to limit the scope of embodiments of this application. The sequence numbers in the following processes do not mean execution sequences. The execution sequences of the processes should be determined based on functions and internal logic of the processes, and should not constitute any limitation on implementation processes of embodiments of this application. It should be understood that, objects described in this way may be interchangeable in proper cases, so that solutions other than embodiments of this application can be described. In addition, in embodiments of this application, words such as "S510" and "S601" are merely identifiers for ease of description, and do not limit an order of performing steps.

Third, in embodiments of this application, the terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Fourth, "store" in embodiments of this application may mean being stored in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in this application.

Fifth, a "protocol" in embodiments of this application may be a standard protocol in the communication field, for example, may include an NR protocol, and a related protocol applied to a future communication system. This is not limited in this application.

Sixth, in embodiments of this application, "of (of)", "corresponding, relevant (corresponding, relevant)", "corresponding (corresponding)", and "associate (associate)" may sometimes be mixed for use. It should be noted that, when a difference between the terms is not emphasized, meanings to be expressed are consistent.

Seventh, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Eighth, dashed-line boxes in the method flowcharts in the accompanying drawings of the specification of this application represent optional steps.

Without a loss of generality, the following uses interaction between network elements as an example to describe in detail the communication method provided in embodiments of this application.

FIG. 5 is a schematic flowchart of a communication method according to an embodiment of this application. The following steps are included.

S501: A procedure in which a calling party initiates a call request and a called party returns a 180 message.

In the procedure in which the calling party initiates the call request and the called party returns the 180 message, a media plane network element providing an access-type service for a first terminal and a second terminal can be determined to be obtained.

For example, the first terminal is a calling terminal, and the second terminal is a called terminal; or the first terminal is a called terminal, and the second terminal is a calling terminal. Specifically, for a procedure of determining the media plane network element providing the access-type service for the first terminal and the second terminal, refer to the procedure shown in FIG. 2(a)-1 and FIG. 2(a)-2. A media endpoint providing the access-type service may still use the identifiers (for example, T_caller_UE, T_caller_NW, T_called_UE, and T_called_NW) shown in FIG. 2(a)-1 and FIG. 2(a)-2. Details are not described herein again.

For ease of description, in this embodiment, an example in which the first terminal is a calling terminal (for example, UE_O shown in FIG. 2(a)-1 and FIG. 2(a)-2) and the second terminal is a called terminal (for example, UE_T shown in FIG. 2(a)-1 and FIG. 2(a)-2) is used for description. It should be understood that, when the first terminal is UE_T and the second terminal is UE_O, an execution body of steps performed by UE_O in the following embodiments may be replaced with UE_T, and an execution body of steps performed by UE_T may be replaced with UE_O. Details are not described again.

It can be learned from the procedure shown in FIG. 2(a)-1 and FIG. 2(a)-2 that, determining a media plane network element providing an access-type service for UE_O and UE_T includes: determining a UMF (for example, UMF_O shown in FIG. 2(a)-1 and FIG. 2(a)-2) providing the access-type service for UE_O, and determining a UMF (for example, UMF_T shown in FIG. 2(a)-1 and FIG. 2(a)-2) providing the access-type service for UE_T.

In this embodiment, a specific procedure of determining the media plane network element providing the access-type service for UE_O and UE_T is not limited. For details, refer to a procedure of determining the media plane network element providing the access-type service in the current related technology, this embodiment mainly relates to how an application server selects, after receiving call signaling, a media plane network element providing a resource-type service, and how to perform the resource-type service.

The following uses an example in which a called-side application server (for example, AS_T) selects the UMF (for example, UMF _T/UMF_T_Res) providing the resource-type service for description. It should be understood that, when a calling-side application server (for example, AS_O) selects a UMF (for example, UMF_O/O_Res) providing the resource-type service, an execution body of steps performed by the called-side application server in the following embodiments may be replaced with the calling-side application server, and an execution body of steps performed by the called-side media plane network element providing the resource-type service may be replaced with the media plane network element providing the resource-type service. Details are not described again.

Specifically, to select the media plane network element providing the resource-type service, the method procedure shown in FIG. 5 further includes the following step.

S511: An application server sends a request message #1 to an NRF, and correspondingly, the NRF receives the request message #1 sent by the application server.

Refer to the descriptions of step S215a. Details are not described herein again. Specifically, the application server is an application server (for example, AS_T shown in FIG. 5) corresponding to the second terminal.

S512: The NRF sends information about the media plane network element to AS_T, and correspondingly, AS_T receives the information about the media plane network element sent by the NRF.

Specifically, in this embodiment, the information about the media plane network element sent by the NRF to AS_T may be information about UMF_T (for example, refer to the information included in the response message #1 in step S216a), or may be information about UMF _T_Res (for example, refer to the information included in the response message #2 in step S216b).

For ease of description, the media plane network element indicated by the information about the media plane network element is denoted as UMF_T/UMF_T_Res below.

For example, the information about the media plane network element may be an identifier (identify, ID) of UMF_T/UMF_T_Res, or other information that may identify UMF_T/UMF_T_Res. This is not limited in this application.

Further, in this embodiment, after receiving the information about the media plane network element, AS_T does not need to determine whether UMF_T/UMF_T_Res indicated by the information about the media plane network element and UMF_T providing the access-type service are a same UMF. It may be understood as that, in this embodiment, AS_T does not perceive whether a scenario is a converged scenario or a non-converged scenario, and directly requests UMF_T/UMF_T_Res to allocate a media endpoint used to provide the resource-type service. The method procedure shown in FIG. 5 further includes the following step.

S520: AS_T sends request information to UMF_T/UMF_T_Res, and correspondingly, UMF_T/UMF_T_Res receives the request information from AS_T.

It may be understood as that, in this embodiment, AS_T does not need to determine a relationship between the media plane network element indicated by the received information about the media plane network element and determined UMF_T providing the access-type service, but directly initiates a media endpoint allocation request. For AS_T, an operating procedure is simplified, and processing efficiency is improved. In addition, in this embodiment, a converged scenario and a non-converged scenario are no longer distinguished, and different scenarios are based on a same processing procedure.

UMF _T/UMF_T_Res is a UMF (for example, UMF_T shown in FIG. 2(b) or UMF_T_Res shown in FIG. 2(c)) providing the resource-type service.

The request information is used to request UMF_T/UMF_T_Res to allocate the media endpoint used to provide the resource-type service. It may also be understood as that, the request information is used to request a target media endpoint providing a sound playing service, or the request information is used to request information about the target media endpoint. The information about the target media endpoint may include an IP address and a port number that are used by UMF_T/UMF_T_Res to provide the sound playing service. The IP address and the port number that are used by UMF_T/UMF_T_Res to provide the sound playing service may be understood as an IP address and a port number that are included in a local address of a second media endpoint.

It may be understood that, a specific name of the request information is not limited in embodiments of this application. For example, the request information may also be referred to as an endpoint allocation request message.

For example, the request information may include an IP address that is on UMF_T/UMF_T_Res and that is interconnected with the second media endpoint. For example, the request information includes a remote address. The remote address may be understood as an address of a media endpoint that establishes a connection to the second media endpoint, and may be referred to as a remote address of the second media endpoint.

Specifically, the remote address included in the request information is a remote IP address and remote port information (for example, the port number).

For example, the request information includes information about a media endpoint that is on UMF_O that is interconnected with the T-side UMF. For ease of description, the information about the media endpoint that is on UMF_O and that is interconnected with a T-side UMF is the information about T_caller_NW of UMF_O. For example, the request information may include SDP information, and the SDP information includes an IP address of T_caller_NW of UMF_O. Alternatively, the SDP information includes the IP address and a port number of T_caller_NW of UMF_O.

For another example, the request information includes information about a media endpoint that is on UMF_T that is interconnected with the T-side UMF. For ease of description, the information about the media endpoint that is on UMF_T and that is interconnected with the T-side UMF is information about T_called_NW of UMF_T. For example, the request information may include SDP information, and the SDP information includes an IP address of T_called_NW of UMF_T. Alternatively, the SDP information includes the IP address and a port number of T_calledNW of UMF_T.

It should be understood that, the foregoing request information includes the IP address and the port number of T_caller_NW, or the IP address and the port number of T_called_NW. This is merely an example for describing a possible case in which the request information includes the information about the media endpoint interconnected with the T-side UMF, and does not constitute any limitation on the protection scope of this application. The information that is about the media endpoint interconnected with the T-side UMF and that is included in the request information may alternatively be information about another media endpoint. Examples are not described one by one herein again.

Specifically, in this embodiment, the request information further includes information about a first media endpoint, and the information about the first media endpoint includes information about the media endpoint used to provide the access-type service.

For example, the request information further includes information about T_called_NW, and T_called_NW is the media endpoint determined in step S501. The information about T_called_NW may include an identifier (for example, UMF-beijing-haidian1) of a UMF to which T_called_NW belongs and an identifier (for example, T-2) of T_called_NW. For example, the request information is HTTP information. In an example, the HTTP information may be:

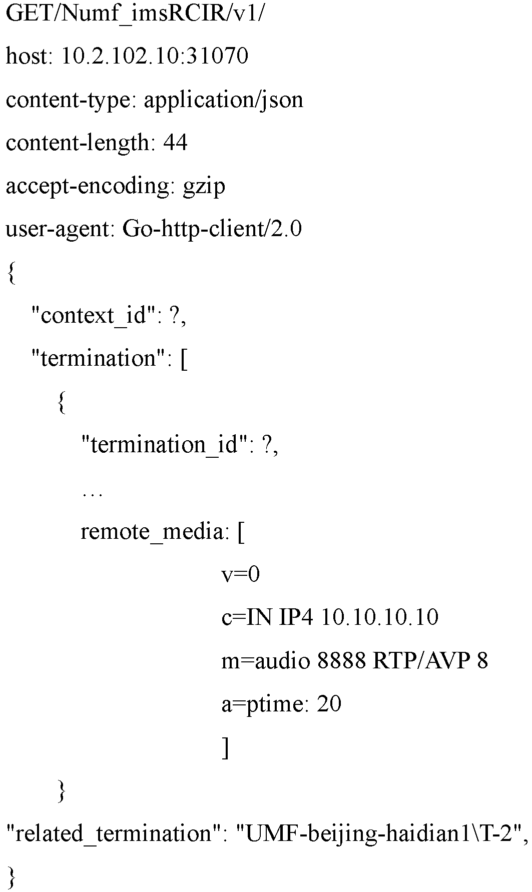

imsRCIR represents an NFS providing a Reserve and (or) Configure IMS Resource function. The related_termination_UMF field represents the information about the first media endpoint, and includes two parts. A first part is information about a UMF to which the first media endpoint belongs, and a second part is an identifier of a media endpoint. The remote address 10.10.10.10:8888 may be understood as the IP address of T_caller_NW.

UMF_T/UMF_T_Res receives the request information, and may determine, based on the information about the first media endpoint included in the request information, whether the first media endpoint is a media endpoint on UMF_T/UMF_T_Res. The procedure shown in FIG. 5 further includes the following step.

S530: UMF_T/UMF_T_Res determines, based on the information about the first media endpoint, whether the first media endpoint is the media endpoint on UMF_T/UMF_T_Res.

It may be understood that, in this embodiment, AS_T does not need to determine a relationship between the media plane network element indicated by the received information about the media plane network element and determined UMF_T providing the access-type service, but directly initiates the request information. In addition, through the information about the first media endpoint that is carried in the request information, UMF_T/UMF_T_Res of the received request information determines whether UMF_T/UMF_T_Res is the UMF that can provide the access-type service and the resource-type service or the UMF providing the resource-type service.

For example, UMF_T/UMF_T_Res determines, based on the information about the first media endpoint, whether the first media endpoint is the media endpoint on UMF_T/UMF_T_Res, to obtain a determining result. The determining result includes: The first media endpoint is the media endpoint on UMF_T/UMF_T_Res or the first media endpoint is not the media endpoint on UMF_T/UMF_T_Res.

It can be learned from the foregoing that, the information about the first media endpoint includes the information about the UMF to which the first media endpoint belongs and an identifier of the first media endpoint. Alternatively, the information about the first media endpoint includes an identifier of the first media endpoint, and the identifier of the first media endpoint includes the information about the UMF to which the first media endpoint belongs.

UMF_T/UMF_T_Res may determine, based on the information about the UMF to which the first media endpoint belongs, whether the first media endpoint is the media endpoint on UMF_T/UMF_T_Res.

For example, UMF_T/UMF_T_Res determines, based on the information about the UMF to which the first media endpoint belongs, that the UMF to which the first media endpoint belongs is UMF_T/UMF_T_Res. Further, UMF_T/UMF_T_Res determines, based on the identifier of the first media endpoint, that the first media endpoint is an endpoint that has been allocated by UMF_T/UMF_T_Res.

As a possible implementation, UMF_T/UMF_T_Res determines that the first media endpoint is the media endpoint on UMF_T/UMF_T_Res. It may be understood as that, the foregoing determining result is that the first media endpoint is the media endpoint on UMF_T/UMF_T_Res (or the first media endpoint belongs to UMF_T/UMF_T_Res).

In this implementation, it may be understood as that, the media endpoint used to provide the access-type service is allocated by UMF_T/UMF_T_Res of the second media endpoint used to provide the resource-type service. In other words, UMF_T/UMF_T_Res may provide both the access-type service and the resource-type service. This may be understood as the foregoing converged scenario, that is, UMF _T/UMF_T_Res and UMF_T are the same UMF.

Specifically, when UMF_T/UMF_T_Res determines that the first media endpoint is the media endpoint on UMF_T/UMF_T_Res, UMF_T/UMF_T_Res may not need to allocate a new media endpoint, but use the allocated first media endpoint as the second media endpoint used to provide the resource-type service. In this implementation, the local address of the second media endpoint is the same as the local address of the first media endpoint, and the remote address of the second media endpoint may be the same as or different from the remote address of the first media endpoint. It may be understood as that, the second media endpoint is determined by UMF_T/UMF_T_Res depending on whether the first media endpoint belongs to the media plane network element.

The local address and the remote address are specific to a single media endpoint. In a quintuple connection between a media endpoint and the outside, the local address refers to an IP address and a port of the local address in the quintuple, and the remote address refers to an IP address and a port of a peer network element in the quintuple.

For example, in this implementation, the second media endpoint may be referred to as a mirror media endpoint of the first media endpoint. For example, the first media endpoint is T_called_NW, and the second media endpoint is T_called_NW'.

It should be noted that, the first media endpoint and the second media endpoint are identified by using different identification information. That is, even if a new media endpoint is not allocated by UMF_T/UMF_T_Res, the application server that applies for allocation of the second media endpoint really obtains information about a new media endpoint.

As another possible implementation, UMF_T/UMF_T_Res determines that the first media endpoint is not a media endpoint on UMF_T/UMF_T_Res.

In this implementation, it may be understood as that, the media endpoint used to provide the access-type service is not allocated by UMF_T/UMF_T_Res of the second media endpoint used to provide the resource-type service. In other words, UMF_T/UMF_T_Res cannot provide both the access-type service and the resource-type service. This may be understood as the foregoing non-converged scenario, that is, UMF_T/UMF_T_Res and UMF_T are not the same UMF.

Specifically, when UMF _T/UMF_T_Res determines that the first media endpoint is not the media endpoint on UMF_T/UMF_T_Res, UMF_T/UMF_T_Res allocates a new media endpoint, which is similar to the allocation of T_called_media shown in FIG. 2(c). In this implementation, the local address of the second media endpoint is different from the local address of the first media endpoint.

It should be understood that, after UMF_T/UMF_T_Res allocates the second media endpoint, the information about UMF_T/UMF_T_Res is recorded in a local memory. For example, Table 2 is shown below.

**Table 2: The first media endpoint is the media endpoint on UMF_T/UMF_T_Res, the second media endpoint is the mirror media endpoint of the first media endpoint, and UMF_T/UMF_T_Res is UMF_T described above.**

| Endpoint | First media endpoint (for example, T_called_NW) | Second media endpoint (T_called_NW' (mirror)) |
|---|---|---|
| Local address | IP_called_NW | IP_called_NW |
| Remote address | IP_caller_NW | IP_caller_NW or another |

Alternatively, Table 3 is shown below.

**Table 3: The first media endpoint is not the media endpoint on UMF_T/UMF_T_Res, and UMF_T/UMF_T_Res is UMF_T_Res described above.**

| Endpoint | Second media endpoint |
|---|---|
| Local address | IP_called_media |
| Remote address | IP_caller_NW or another |

Further, UMF_T/UMF_T_Res sends the information about the second media endpoint to the application server. The method procedure shown in FIG. 5 further includes the following step.

S540: UMF_T/UMF_T_Res sends the information about the second media endpoint to AS_T, and correspondingly, AS_T receives the information about the second media endpoint from UMF_T/UMF_T_Res.

For example, the information about the second media endpoint may be the IP address and the port number of the second media endpoint.

For example, the information about the second media endpoint is sent to AS_T through an HTTP response message. In an example, the HTTP response message may be:

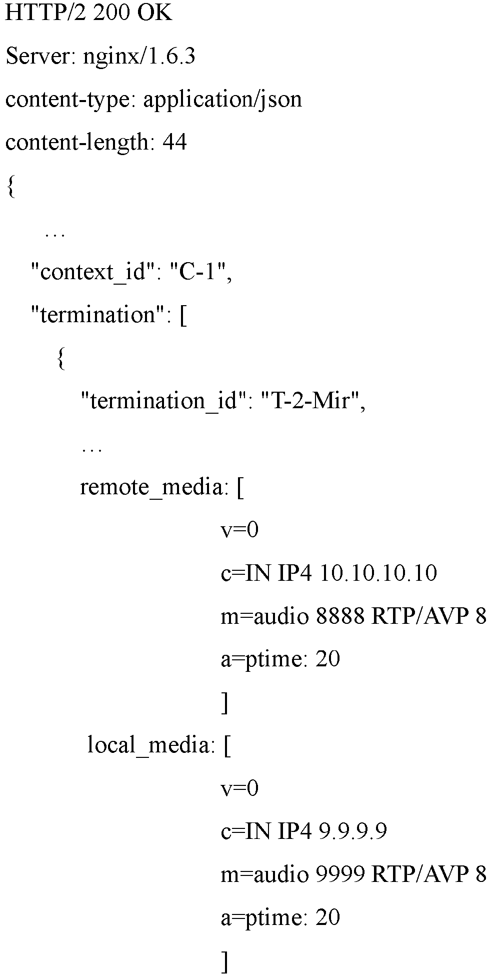

The termination_id field represents a unique identifier of the second media endpoint. For example, a value T-2-Mir represents that the second media endpoint is a mirror media endpoint of the first media endpoint T-2, or may be identified by using other identification information. This is not limited in this embodiment. The local address of the second media endpoint is 9.9.9.9: 9999, which is the same as the local address of T_called_NW.

The foregoing step S520 to step S540 describe in detail how to select the media plane network element providing the resource-type service, and a process in which the media plane network element providing the resource-type service allocates the second media endpoint used to provide the resource-type service. After the second media endpoint providing the resource-type service is determined, the resource-type service can be performed.

Specifically, in this embodiment, the resource-type service procedure includes the following two manners.

Manner 1: UMF_T/UMF_T_Res provides a resource-type service for UE_O, and a second media endpoint on UMF_T/UMF_T_Res provides the resource-type service.

For ease of understanding, descriptions are provided with reference to FIG. 6. FIG. 6 is a schematic flowchart of providing a resource-type service according to an embodiment of this application. The following steps are included.

S601: AS_T sends a 180 message to AS_O, and correspondingly, AS_O receives the 180 message sent by AS_T.

After receiving information about the second media endpoint, AS_T may construct SDP information, to be specific, assign an IP address of the second media endpoint of UMF_T/UMF_T_Res as a value to an IP address in the SDP information, assign a port number of the second media endpoint of UMF_T/UMF_T_Res as a value to a port in the SDP information, and then sends the 180 message including the SDP information to AS_O. It may be understood as that, AS_T may transfer the IP address of the second media endpoint to AS_O through the 180 message. For example, AS_T may send the 180 message carrying the IP address of the second media endpoint to SCSCF_T, and SCSCF_T forwards the 180 message carrying the IP address of the second media endpoint to SCSCF_O. SCSCF_O forwards the 180 message carrying the IP address of the second media endpoint to AS_O.

S602: AS_O sends the 180 message to PCSCF_O, and correspondingly, PCSCF_O receives the 180 message sent by AS_O.

Content carried in the 180 message is the same as that carried in the 180 message in S602, that is, the 180 message also includes the information about the second media endpoint.

S603: PCSCF_O indicates, to UMF_O, that T_caller_NW of UMF_O is connected to the second media endpoint of UMF _T/UMF_T_Res.

S604: PCSCF_O sends a 18x message to UE_O, and correspondingly, UE_O receives the 18x message sent by PCSCF_O.

PCSCF_O may replace the IP address in the SDP information included in the 180 message received from AS_O with an IP address of T_caller_UE, generate a new 18x message, and then forward the new 18x message to UE_O. For example, the 18x message may be a 183 message.

S605: T_caller_NW of UMF_O establishes a connection to the second media endpoint of UMF_T/UMF_T_Res.

It may be understood that, when T_caller_NW is connected to the second media endpoint, a channel connection between UMF_O and UMF_T/UMF_T_Res may be implemented, to implement the channel connection between UE_O and UMF_T/UMF_T_Res.

S606: T_caller_UE of UMF_O establishes a connection to UE_O.

S607: UE_O and the UE_T exchange a PRACK request message/200 message.

AS_T receives the PRACK request message/200 message, and may determine that a connection has been established between T_caller_NW of UMF_O and the second media endpoint of UMF_T/UMF_T _Res.

S608: AS_T sends indication information to UMF_T/UMF_T_Res, and correspondingly, UMF_T/UMF_T_Res receives the indication information from AS_T.

As a possible implementation, in response to determining that the connection has been established between T_caller_NW of UMF_O and the second media endpoint of UMF_T/UMF_T_Res, AS_T may send the indication information to UMF_T/UMF_T_Res, where the indication information may indicate UMF_T/UMF_T_Res to provide the resource-type service. The indication information may include the information about the second media endpoint of UMF_T/UMF_T_Res, to indicate that the second media endpoint is used to provide the resource-type service.

S609: UMF_T/UMF_T_Res determines that a local address and a remote address of the second media endpoint are different.

Specifically, after receiving the indication information, UMF_T/UMF_T_Res determines that the local address and the remote address of the second media endpoint are different.

S610: UMF_T/UMF_T_Res provides the resource-type service for UE_O.

As a possible implementation, in Manner 1, if UMF_T/UMF_T_Res is UMF_T described above, and the second media endpoint is T_called_NW described above, a media stream transmission path corresponding to the resource-type service provided by UMF_T/UMF_T_Res for UE_O is shown in FIG. 3.

As another possible implementation, in Manner 1, if UMF_T/UMF_T_Res is UMF_T_Res described above, and the second media endpoint is T_called_media described above, a media stream transmission path corresponding to the resource-type service provided by UMF_T/UMF_T_Res for UE_O is shown in (a) in FIG. 4.

Manner 2: UMF_T/UMF_T_Res provides a resource-type service for UE_T, and a third media endpoint on UMF_T/UMF_T_Res provides the resource-type service.

For ease of understanding, descriptions are provided with reference to FIG. 7. FIG. 7 is another schematic flowchart of providing a resource-type service according to an embodiment of this application. The following steps are included.

S701: AS_T sends an ACK message to PCSCF_T, and correspondingly, PCSCF_T receives the ACK message sent by AS_T.

For example, the ACK message is a response message of a 200 message. After receiving information about a second media endpoint, AS_T may construct SDP information, to be specific, assign an IP address of the second media endpoint of UMF_T/UMF_T_Res as a value to an IP address in the SDP information, assign a port number of the second media endpoint of UMF_T/UMF_T_Res as a value to a port in the SDP information, and then sends the ACK message including the SDP information to PCSCF_T. It may be understood as that, AS_T may transfer the IP address of the second media endpoint to PCSCF_T through the ACK message.

S702: PCSCF_T indicates, to UMF_T, that T_called_NW of UMF_T is connected to the second media endpoint of UMF _T/UMF_T_Res.

S703: PCSCF_T sends the ACK message to UE_T, and correspondingly, UE_T receives the ACK message sent by PCSCF_T.

PCSCF_T may replace the IP address in the SDP information included in the ACK message received from AS_T with an IP address of T_called_UE, generate a new ACK message, and then forward the new ACK message to UE_T.

S704: AS_T sends indication information to UMF_T/UMF_T_Res, and correspondingly, UMF_T/UMF_T_Res receives the indication information from AS_T.

The indication information may include the information about the second media endpoint of UMF_T/UMF_T_Res, to indicate that the second media endpoint is used to provide the resource-type service.

S705: UMF_T/UMF_T_Res determines that a local address and a remote address of the second media endpoint are the same.

Specifically, after receiving the indication information, UMF_T/UMF_T_Res determines that the local address and the remote address of the second media endpoint are the same.

UMF_T/UMF_T_Res provides the resource-type service through the third media endpoint. The third media endpoint is a media endpoint that is configured on UMF_T/UMF_T_Res and that corresponds to the second media endpoint. UMF_T/UMF_T_Res may determine the third media endpoint based on the information about the second media endpoint included in the indication information.

As a possible implementation, if UMF_T/UMF_T_Res is UMF _T providing the access service, the second media endpoint is a mirror endpoint of T_called_NW described above (for example, the local address of the second media endpoint is the same as that of T_called_NW). The third media endpoint is T_called_UE described above, a correspondence between T_called_NW and T_called_UE is stored in UMF_T/UMF_T_Res, and UMF_T/UMF_T_Res may determine T_called_UE based on the correspondence and information about T_called_NW.

In this implementation, after receiving the indication information, UMF_T/UMF_T_Res determines that the local address and the remote address of the second media endpoint are the same. The remote address of the second media endpoint may be learned of by using an IP address and a port number that are carried in request information. In embodiments of this application, it is specified that when the local address and the remote address of the second media endpoint allocated by UMF_T/UMF_T_Res are the same, the third media endpoint that is configured on UMF_T/UMF_T_Res and that corresponds to the second media endpoint provides the resource-type service.

S706: UMF_T/UMF_T_Res provides the resource-type service for UE_T.

It should be noted that, in Manner 2, UMF_T/UMF_T_Res provides the resource-type service for UE_T. That is, a connection between T_caller_NW and the second media endpoint of UMF_T/UMF_T_Res does not need to be established. In this way, in a procedure of determining a media plane network element providing an access-type service for a first terminal and a second terminal, an invite message sent by UE_O to PCSCF_O may not carry the SDP information.

In the embodiment shown in FIG. 5, the application server includes, in the request information requesting to allocate the second media endpoint used to provide the resource-type service, the information about the first media endpoint used to provide the access-type service, so that the media plane network element that allocates the second media endpoint determines, based on the information about the first media endpoint, whether the first media endpoint is the media endpoint on the media plane network element, and the media plane network element may allocate the second media endpoint based on a determining result. That the first media endpoint is the media endpoint on the media plane network element may be understood as that the media plane network element that can provide the resource-type service and the media plane network element that can provide the access-type service are a same media plane network element, and correspond to a media plane network element that is determined to provide the resource-type service in the converged scenario. In addition, that the first media endpoint is not the media endpoint on the media plane network element may be understood as that the media plane network element that can provide the resource-type service and the media plane network element that can provide the access-type service are not a same media plane network element, and correspond to a media plane network element that is determined to provide the resource-type service in the non-converged scenario. In other words, in the foregoing technical solution, the application server does not need to determine different processing manners depending on whether the media plane network element providing the access-type service and the media plane network element providing the resource-type service are the same media plane network element, and the media plane network element that allocates the second media endpoint determines the different processing manners. In this way, processing difficulty of the application server is reduced, and processing efficiency of the application server is improved.

It should be understood that, the sequence numbers of the foregoing processes do not mean execution sequences. The execution sequences of the processes should be determined based on functions and internal logic of the processes, and should not constitute any limitation on implementation processes of embodiments of this application.

It should be further understood that, in various embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description (for example, the media plane network element and the application server). It should be understood that, a specific form of the device is not limited in embodiments of this application. For example, all devices that can implement a same function in the future are applicable to embodiments of this application.

It may be understood that, in the foregoing method embodiments, a method and an operation that are implemented by the media plane network element may also be implemented by a component that can be used by the media plane network element; and a method and an operation that are implemented by the application server may also be implemented by a component that can be used by the application server.

The foregoing describes in detail the communication method provided in embodiments of this application with reference to FIG. 5 to FIG. 7. The foregoing communication method is mainly described from a perspective of interaction between the media plane network element and the application server. It may be understood that, to implement the foregoing functions, the media plane network element and the application server include a corresponding hardware structure and/or software module for performing each function.

A person skilled in the art should be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for the particular application, but it should not be considered that the implementation goes beyond the scope of this application.

The following describes in detail communication apparatuses provided in embodiments of this application with reference to FIG. 8 and FIG. 9. It should be understood that, descriptions of apparatus embodiments correspond to the descriptions of the method embodiments. Therefore, for content that is not described in detail, refer to the method embodiments. For brevity, some content is not described herein again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. The following provides description by using an example in which each functional module is obtained through division based on each corresponding function.

FIG. 8 is a block diagram of a communication apparatus 800 according to an embodiment of this application. The communication apparatus 800 may include a processing module 810 and a transceiver module 820. Optionally, a storage unit may be further included. The storage unit may be configured to store instructions (code or a program) and/or data. The processing module 810 and the transceiver module 820 may be coupled to the storage unit. For example, the processing module 810 may read the instructions (the code or the program) and/or the data in the storage unit, to implement a corresponding method. The foregoing modules may be disposed independently, or may be partially or completely integrated.

In some possible implementations, the communication apparatus 800 can correspondingly implement behavior and a function of the media plane network element in the foregoing method embodiments. The communication apparatus 800 may be the media plane network element, or may be a component (for example, a chip or a circuit) used in the media plane network element, or may be a chip or a chip set in the media plane network element, or a part of a chip configured to perform a related method function.

For example, the communication apparatus 800 implements the method performed by the media plane network element (for example, UMF_T/UMF_T_Res) in embodiments in at least one of FIG. 5 to FIG. 7. The transceiver module 820 is configured to perform operations related to message receiving and sending by UMF_T/UMF_T_Res. For example, the transceiver module 820 is configured to receive request information from an application server, where the request information is used to request the media plane network element to allocate a media endpoint used to provide a resource-type service, and the request information includes information about a first media endpoint used to provide an access-type service; and the transceiver module 820 is further configured to send, to the application server, information about a second media endpoint, where the second media endpoint is determined by the media plane network element depending on whether the first media endpoint belongs to the media plane network element. The processing module 810 is configured to perform an operation of UMF_T/UMF_T_Res other than receiving and sending a message.

As an optional implementation, the first media endpoint belongs to the media plane network element, and a local address of the second media endpoint is the same as a local address of the first media endpoint.

As an optional implementation, the processing module 810 determines, based on a case in which the first media endpoint belongs to the media plane network element, not to allocate a new media endpoint, and uses a mirror media endpoint of the first media endpoint as the second media endpoint.

As an optional implementation, the first media endpoint does not belong to the media plane network element, and a local address of the second media endpoint is different from a local address of the first media endpoint.

As an optional implementation, the processing module 810 determines, based on a case in which the first media endpoint does not belong to the media plane network element, to allocate a new media endpoint as the second media endpoint.

As an optional implementation, the information about the first media endpoint includes an identifier of a media plane network element to which the first media endpoint belongs and an identifier of the first media endpoint.

As an optional implementation, the transceiver module 820 is further configured to receive indication information from the application server, where the indication information indicates to perform the resource-type service, and the indication information includes the information about the second media endpoint; and the processing module 810 is further configured to perform the resource-type service based on the indication information.

In some other possible implementations, the communication apparatus 800 can correspondingly implement behavior and a function of the application server (for example, AS_T) in the foregoing method embodiments. The communication apparatus 800 may be an application server, or may be a component (for example, a chip or a circuit) used in the application server, or may be a chip or a chip set in a network repository function network element, or a part of a chip configured to perform a related method function.

For example, the communication apparatus 800 implements the methods performed by AS_T in embodiments in FIG. 5 to FIG. 7. The transceiver module 820 is configured to perform operations related to message receiving and sending by AS_T, for example, configured to receive information about a media plane network element from a service discovery function network element; the transceiver module is further configured to send request information to the media plane network element, where the request information includes information about the first media endpoint, the information about the first media endpoint includes information about a media endpoint configured to provide an access-type service, and the request information is used to request the media plane network element to allocate a media endpoint used to provide a resource-type service; and the transceiver module is further configured to receive the information about the second media endpoint from the media plane network element. The processing module 810 is configured to perform an operation of AS_T other than receiving and sending a message.

As an optional implementation, the request information further includes a remote address, and the remote address indicates an address of a media endpoint that establishes a connection to the second media endpoint.

As an optional implementation, the first media endpoint belongs to the media plane network element, and a local address of the second media endpoint is the same as a local address of the first media endpoint.

As an optional implementation, the first media endpoint does not belong to the media plane network element, and a local address of the second media endpoint is different from a local address of the first media endpoint.

As an optional implementation, the information about the first media endpoint includes an identifier of a media plane network element to which the first media endpoint belongs and an identifier of the first media endpoint.

As an optional implementation, the transceiver module 820 is further configured to send indication information to the media plane network element, where the indication information indicates to perform the resource-type service.

It should be understood that, in embodiments of this application, the processing module 810 may be implemented as a processor or a processor-related circuit component, and the transceiver module 820 may be implemented as a transceiver or a transceiver-related circuit component or a communication interface.

FIG. 9 is a block diagram of a communication apparatus 900 according to an embodiment of this application. The communication apparatus 900 may be a terminal device, and can implement a function of the media plane network element in the methods provided in embodiments of this application. The communication apparatus 900 may alternatively be an apparatus that can support the media plane network element in implementing a corresponding function in the methods provided in embodiments of this application. The communication apparatus 900 may be a chip system. In embodiments of this application, the chip system may include a chip, or may include a chip and another discrete component. For a specific function, refer to descriptions of the foregoing method embodiments. The communication apparatus 900 may alternatively be an application server, and can implement functions of the application server in the methods provided in embodiments of this application. The communication apparatus 900 may alternatively be an apparatus that can support the application server in implementing a corresponding function in the methods provided in embodiments of this application. The communication apparatus 900 may be a chip system. In embodiments of this application, the chip system may include a chip, or may include a chip and another discrete component. For a specific function, refer to descriptions of the foregoing method embodiments.

The communication apparatus 900 includes one or more processors 920, and may be configured to implement or support the communication apparatus 900 in implementing a function of the media plane network element in the methods provided in embodiments of this application. For details, refer to the detailed descriptions in the method examples. Details are not described herein again. The one or more processors 920 may alternatively be configured to implement or support the communication apparatus 900 in implementing the function of the application server in the methods provided in embodiments of this application. For details, refer to the detailed descriptions in the method examples. Details are not described herein again. The processor 920 may also be referred to as a processing unit or a processing module, and may implement a specific control function. The processor 920 may be a general-purpose processor, a dedicated processor, or the like. For example, the processor includes a central processing unit, an application processor, a modem processor, a graphics processor, an image signal processor, a digital signal processor, a video codec processor, a controller, a memory, a neural network processor, and/or the like. The central processing unit may be configured to control the communication apparatus 900, execute a software program, and/or process data. Different processors may be independent devices, or may be integrated into one or more processors, for example, integrated into one or more application-specific integrated circuits.

Optionally, the communication apparatus 900 includes one or more memories 930, configured to store program instructions and/or data. The memory 930 is coupled to the processor 920. The coupling in this embodiment of this application may be an indirect coupling or a communication connection between apparatuses, units, or modules in an electrical form, a mechanical form, or another form, and is used for information exchange between the apparatuses, the units, or the modules. The processor 920 may operate in collaboration with the memory 930. The processor 920 may execute the program instructions and/or the data stored in the memory 930, so that the communication apparatus 900 implements the corresponding method. At least one of the at least one memory may be included in the processor 920.

The communication apparatus 900 may further include the communication interface 910, and is configured to communicate with another device or a communication network, such as a radio access network (radio access network, RAN), a wireless local area network (wireless local area network, WLAN), or a wired access network by using any apparatus such as a transceiver. The communication interface 910 is configured to communicate with another device by using a transmission medium, so that an apparatus in the communication apparatus 900 may communicate with the another device. For example, when the communication apparatus 900 is a media plane network element, the another device is an application server; or when the communication apparatus is an application server, the another device is a media plane network element. The processor 920 may send and receive data through the communication interface 910. The communication interface 910 may be specifically a transceiver.

This embodiment of this application does not limit a specific connection medium between the communication interface 910, the processor 920, and the memory 930. In this embodiment of this application, in FIG. 9, the memory 930, the processor 920, and the communication interface 910 are connected through a bus 940, and the bus is represented using a bold line in FIG. 9. A connection manner between other components is merely an example for description, and imposes no limitation. The bus may be classified into an address bus, a data bus, a control bus, and the like. For ease of representation, only one thick line is used to represent the bus in FIG. 9, but this does not mean that there is only one bus or only one type of bus.

In this embodiment of this application, the processor 920 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

The memory 930 may be a ROM or another type of static storage device that can store static information and instructions, or a RAM or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile optical disc, a blue optical disc, and the like), a magnetic disk storage medium or another magnetic storage device, or any other medium that can carry or store expected program code in a form of an instruction structure or a data structure and can be accessed by a computer. However, this is not limited herein. The memory may exist independently, and is connected to the processor through the communication bus 940. The memory may alternatively be integrated with the processor.

The memory 930 is configured to store computer-executable instructions for executing the solutions in this application, and the processor 920 controls execution of the computer-executable instructions. The processor 920 is configured to execute the computer-executable instructions stored in the memory 930, to implement the communication method provided in the foregoing embodiments of this application.

Optionally, the computer-executable instructions in embodiments of this application may also be referred to as application program code. This is not specifically limited in embodiments of this application.

It may be understood that, the communication apparatus in the foregoing embodiment may be a media plane network element (or an application server), or may be a circuit, or may be a chip used in the media plane network element (or the application server), or another combined component, component, or the like that has the foregoing media plane network element (or the application server). The processing module may be a processor, for example, a central processing module (central processing unit, CPU). The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and the transceiver machine.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

Embodiments of this application further provide a communication system. Specifically, the communication system includes at least one media plane network element and at least one application server. For example, the communication system includes a media plane network element, an application server, and a control plane network element that are configured to implement related functions in any one or more of FIG. 5 to FIG. 7. For details, refer to related descriptions in the method embodiments. Details are not described herein again.

Embodiments of this application further provide a computer-readable storage medium, including instructions. When the instructions are run on a computer, the computer is enabled to perform the method performed by the media plane network element in any one or more of FIG. 5 to FIG. 7. Alternatively, when the instructions are run on a computer, the computer is enabled to perform the method performed by the application server in any one or more of FIG. 5 to FIG. 7.

Embodiments of this application further provide a computer program product, including instructions. When the instruction are run on a computer, the computer is enabled to perform the method performed by the media plane network element in any one or more of FIG. 5 to FIG. 7. Alternatively, when the instructions are run on a computer, the computer is enabled to perform the method performed by the application server in any one or more of FIG. 5 to FIG. 7.

Embodiments of this application provide a chip system. The chip system includes a processor, and may further include a memory, configured to implement the functions of the media plane network element in the foregoing methods, or configured to implement the functions of the application server in the foregoing methods. The chip system may include a chip, or may include a chip and another discrete component.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a media plane network element, request information from an application server, wherein the request information is used to request the media plane network element to allocate a media endpoint used to provide a resource-type service, and the request information comprises information about a first media endpoint used to provide an access-type service; and
sending, by the media plane network element to the application server, information about a second media endpoint used to provide the resource-type service, wherein the second media endpoint is determined by the media plane network element depending on whether the first media endpoint belongs to the media plane network element.

2. The method according to claim 1, wherein the first media endpoint belongs to the media plane network element, and a local address of the second media endpoint is the same as a local address of the first media endpoint.

3. The method according to claim 2, wherein the method further comprises:
determining, by the media plane network element based on a case in which the first media endpoint belongs to the media plane network element, not to allocate a new media endpoint, and using a mirror media endpoint of the first media endpoint as the second media endpoint.

4. The method according to claim 1, wherein the first media endpoint does not belong to the media plane network element, and a local address of the second media endpoint is different from a local address of the first media endpoint.

5. The method according to claim 4, wherein the method further comprises:
determining, by the media plane network element based on a case in which the first media endpoint does not belong to the media plane network element, to allocate a new media endpoint as the second media endpoint.

6. The method according to any one of claims 1 to 5, wherein the information about the first media endpoint comprises an identifier of a media plane network element to which the first media endpoint belongs and an identifier of the first media endpoint.

7. The method according to any one of claims 1 to 6, wherein the method further comprises:
receiving, by the media plane network element, indication information from the application server, wherein the indication information indicates to perform the resource-type service, and the indication information comprises the information about the second media endpoint; and
performing, by the media plane network element, the resource-type service based on the indication information.

8. The method according to claim 7, wherein the request information further comprises a remote address, and the remote address indicates an address of a media endpoint that establishes a connection to the second media endpoint.

9. The method according to claim 8, comprising: when the local address of the second media endpoint is different from the remote address, providing, by the media plane network element, the resource-type service through the second media endpoint; or
when the local address of the second media endpoint is the same as the remote address, providing, by the media plane network element, the resource-type service through a third media endpoint, wherein the third media endpoint is determined by the media plane network element based on the information about the second media endpoint.

10. The method according to any one of claims 1 to 9, wherein the media plane network element is a unified media plane function UMF network element.

11. A communication method, comprising:
receiving, by an application server, information about a media plane network element from a service discovery function network element;
sending, by the application server, request information to the media plane network element, wherein the request information is used to request the media plane network element to allocate a media endpoint used to provide a resource-type service, and the request information comprises information about a first media endpoint used to provide an access-type service; and
receiving, by the application server, information about a second media endpoint from the media plane network element, wherein the second media endpoint is determined by the media plane network element depending on whether the first media endpoint belongs to the media plane network element.

12. The method according to claim 11, wherein the request information further comprises a remote address, and the remote address indicates an address of a media endpoint that establishes a connection to the second media endpoint.

13. The method according to claim 11 or 12, wherein the first media endpoint belongs to the media plane network element, and a local address of the second media endpoint is the same as a local address of the first media endpoint.

14. The method according to claim 11 or 12, wherein the first media endpoint does not belong to the media plane network element, and a local address of the second media endpoint is different from a local address of the first media endpoint.

15. The method according to any one of claims 11 to 14, wherein the information about the first media endpoint comprises an identifier of a media plane network element to which the first media endpoint belongs and an identifier of the first media endpoint.

16. The method according to any one of claims 11 to 15, wherein the method further comprises:
sending, by the application server, indication information to the media plane network element, wherein the indication information indicates to perform the resource-type service, and the indication information comprises the information about the second media endpoint.

17. A communication method, comprising:
receiving, by an application server, information about a media plane network element from a service discovery function network element;
sending, by the application server, request information to the media plane network element, wherein the request information is used to request the media plane network element to allocate a media endpoint used to provide a resource-type service, and the request information comprises information about a first media endpoint used to provide an access-type service; and
sending, by the media plane network element to the application server, information about a second media endpoint used to provide the resource-type service, wherein the second media endpoint is determined by the media plane network element depending on whether the first media endpoint belongs to the media plane network element.

18. The method according to claim 17, wherein the first media endpoint belongs to the media plane network element, and a local address of the second media endpoint is the same as a local address of the first media endpoint.

19. The method according to claim 18, wherein the method further comprises:
determining, by the media plane network element based on a case in which the first media endpoint belongs to the media plane network element, not to allocate a new media endpoint, and using a mirror media endpoint of the first media endpoint as the second media endpoint.

20. The method according to claim 17, wherein the first media endpoint does not belong to the media plane network element, and a local address of the second media endpoint is different from a local address of the first media endpoint.

21. The method according to claim 20, wherein the method further comprises:
determining, by the media plane network element based on a case in which the first media endpoint does not belong to the media plane network element, to allocate a new media endpoint as the second media endpoint.

22. The method according to any one of claims 17 to 21, wherein the information about the first media endpoint comprises an identifier of a media plane network element to which the first media endpoint belongs and an identifier of the first media endpoint.

23. The method according to any one of claims 17 to 22, wherein the method further comprises:
sending, by the application server, indication information to the media plane network element, wherein the indication information indicates to perform the resource-type service, and the indication information comprises the information about the second media endpoint.

24. The method according to claim 23, wherein the request information further comprises a remote address, and the remote address indicates an address of a media endpoint that establishes a connection to the second media endpoint.

25. The method according to claim 24, comprising: when the local address of the second media endpoint is different from the remote address, providing, by the media plane network element, the resource-type service through the second media endpoint; or
when the local address of the second media endpoint is the same as the remote address, providing, by the media plane network element, the resource-type service through a third media endpoint, wherein the third media endpoint is determined by the media plane network element based on the information about the second media endpoint.

26. A communication apparatus, comprising a unit or a module configured to perform the method according to any one of claims 1 to 9.

27. A communication apparatus, comprising a unit or a module configured to perform the method according to any one of claims 10 to 15.

28. A communication apparatus, comprising at least one processor, wherein
the at least one processor is configured to execute a computer program stored in a memory, to enable the apparatus to perform the method according to any one of claims 1 to 9; or
the at least one processor is configured to execute a computer program stored in a memory, to enable the apparatus to perform the method according to any one of claims 10 to 15.

29. A communication system, comprising an application server and a media plane network element, wherein
the media plane network element is configured to perform the method according to any one of claims 1 to 9, and the application server is configured to perform the method according to any one of claims 10 to 15.

30. A computer-readable storage medium, comprising a computer program, wherein
when the computer program is run on a computer, the computer is enabled to perform the method according to any one of claims 1 to 9; or when the computer program is run on a computer, the computer is enabled to perform the method according to any one of claims 10 to 15.

31. A computer program product, wherein the computer program product comprises computer program code; and when the computer program code is run on a computer, the computer is enabled to implement the method according to any one of claims 1 to 9; or when the computer program code is run on a computer, the computer is enabled to implement the method according to any one of claims 10 to 15.
